(19) Europäisches Patentamt
European Patent Office
Office européen des brevets

(11) **EP 4 341 088 B1**

(12) **EUROPÄISCHE PATENTSCHRIFT**

(45) Veröffentlichungstag und Bekanntmachung des Hinweises auf die Patenterteilung:
**20.11.2024   Patentblatt 2024/47**

(21) Anmeldenummer: **22727019.6**

(22) Anmeldetag: **29.04.2022**

(51) Internationale Patentklassifikation (IPC):
**B32B 17/10** (2006.01)      **B60J 3/04** (2006.01)

(52) Gemeinsame Patentklassifikation (CPC):
(C-Sets verfügbar)
**B32B 17/10036; B32B 17/10165; B32B 17/10192; B32B 17/10211; B32B 17/1022; B32B 17/10348; B32B 17/10504; B32B 17/10532; B32B 17/10761; B32B 17/1077; B32B 17/10788;** B32B 2605/00; B32B 2605/08; B60J 3/04; H02M 1/0043;     (Forts.)

(86) Internationale Anmeldenummer:
**PCT/EP2022/061469**

(87) Internationale Veröffentlichungsnummer:
**WO 2022/243009 (24.11.2022 Gazette 2022/47)**

(54) **VERGLASUNGSEINHEIT MIT ELEKTRISCH STEUERBAREN OPTISCHEN EIGENSCHAFTEN MIT MEHREREN UNABHÄNGIGEN SCHALTBEREICHEN**

GLAZING UNIT WITH ELECTRICALLY CONTROLLABLE OPTICAL PROPERTIES WITH MULTIPLE INDEPENDENT SWITCHING AREAS

UNITÉ DE VITRAGE PRÉSENTANT DES CARACTÉRISTIQUES OPTIQUES POUVANT ÊTRE COMMANDÉES DE MANIÈRE ÉLECTRIQUE POURVU DE PLUSIEURS ZONES DE COMMUTATION INDÉPENDANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2021   EP 21174346**

(43) Veröffentlichungstag der Anmeldung:
**27.03.2024   Patentblatt 2024/13**

(73) Patentinhaber: **Saint-Gobain Glass France**
**92400 Courbevoie (FR)**

(72) Erfinder: **STELZER, Richard**
**40547 Düsseldorf (DE)**

(74) Vertreter: **Feist, Florian Arno**
**Saint-Gobain Sekurit Deutschland GmbH**
**SGR-Germany, Patentabteilung**
**Glasstraße 1**
**52134 Herzogenrath (DE)**

(56) Entgegenhaltungen:
**WO-A1-2020/083562      WO-A1-2020/152075**
**DE-A1- 102005 007 427      DE-A1- 102008 060 040**
**DE-A1- 102010 056 203      DE-B3- 102017 213 291**

(52) Gemeinsame Patentklassifikation (CPC): (Forts.)
H02M 1/123; H02M 7/44

C-Sets
**B32B 17/10005, B32B 2367/00**

**Beschreibung**

Die Erfindung betrifft eine Verglasungseinheit mit elektrisch steuerbaren optischen Eigenschaften, deren Verwendung sowie ein Verfahren zu deren Steuerung.

Verglasungseinheiten mit elektrisch steuerbaren optischen Eigenschaften sind als solche bekannt. Sie umfassen Verbundscheiben, welche mit Funktionselementen ausgestattet sind, deren optische Eigenschaften durch eine angelegte elektrische Spannung verändert werden können. Das Anlegen der elektrischen Spannung erfolgt über eine Steuereinheit, welche an zwei Flächenelektroden des Funktionselements angeschlossen ist, zwischen denen sich die aktive Schicht des Funktionselements befindet. Ein Beispiel für solche Funktionselemente sind SPD-Funktionselemente (*suspended particle device*), die beispielsweise aus EP 0876608 B1 und WO 2011033313 A1 bekannt sind. Durch die angelegte Spannung lässt sich die Transmission von sichtbarem Licht durch SPD-Funktionselemente steuern. Ein weiteres Beispiel sind PDLC-Funktionselemente (*polymer dispersed liquid crystal*), die beispielsweise aus DE 102008026339 A1 bekannt sind. Die aktive Schicht enthält dabei Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch eine Herabsetzung der Gesamttransmission als durch eine Erhöhung der Streuung, wodurch die freie Durchsicht verhindert oder ein Blendschutz gewährleistet werden kann. Außerdem sind elektrochrome Funktionselemente bekannt, beispielsweise aus US 20120026573 A1, WO 2010147494 A1 und EP 1862849 A1 und WO 2012007334 A1, bei denen eine Transmissionsänderung durch elektrochemische Prozesse erfolgt, welche durch die angelegte elektrische Spannung induziert wird.

Solche Verglasungseinheiten können beispielsweise als Fahrzeugscheiben verwendet werden, deren Lichttransmissionsverhalten dann elektrisch gesteuert werden kann. Sie können beispielsweise als Dachscheiben verwendet werden, um Sonneneinstrahlung zu verringern oder störende Reflexionen abzumindern. Solche Dachscheiben sind beispielsweise aus DE 10043141 A1 und EP 3456913 A1 bekannt. Ebenfalls wurden Windschutzscheiben vorgeschlagen, bei denen durch ein schaltbares Funktionselement eine elektrisch steuerbare Sonnenblende realisiert ist, um die herkömmliche mechanisch klappbare Sonnenblende in Kraftfahrzeugen zu ersetzen. Windschutzscheiben mit elektrisch steuerbaren Sonnenblenden sind beispielsweise bekannt aus DE 102013001334 A1, DE 102005049081 B3, DE 102005007427 A1 und DE 102007027296 A1.

Es ist ebenfalls bekannt, solche Verglasungseinheit beziehungsweise die schaltbaren Funktionselemente mit mehreren Schaltbereichen zu versehen, deren optische Eigenschaften unabhängig voneinander geschaltet werden können. So kann ein Bereich des Funktionselements selektiv abgedunkelt oder mit einer hohen Lichtstreuung versehen werden, während andere Bereiche transparent bleiben. Verglasungseinheiten mit unabhängigen Schaltbereichen und ein Verfahren zu ihrer Herstellung sind beispielsweise aus WO 2014072137 A1 bekannt. Weiter sei auf WO 2017157626 A1 verwiesen sowie auf WO 2020083562 A1.

Die unabhängigen Schaltbereiche werden typischerweise dadurch ausgebildet, dass eine der Flächenelektroden durch Isolierungslinien in voneinander getrennte Bereiche (Segmente) aufgeteilt wird, welche jeweils unabhängig voneinander mit der Steuereinheit verbunden sind und daher unabhängig angesteuert werden können, während die andere Flächenelektrode keine Isolierungslinien aufweist. Die Isolierungslinien werden typischerweise durch Laserbearbeitung in die Flächenelektrode eingebracht. Die Flächenelektroden können nicht hinsichtlich einer optimalen elektrischen Leitfähigkeit ausgewählt werden, da sie transparent sein müssen, um die Durchsicht durch die Verbundscheibe zu gewährleisten. Typischerweise werden ITO-Schichten als Flächenelektroden verwendet, welche eine vergleichsweise geringe Leitfähigkeit beziehungsweise einen vergleichsweise hohen elektrischen Widerstand aufweisen. Hieraus ergibt sich ein Problem, wenn nur einige der Schaltbereiche mit einer Spannung beaufschlagt werden. Die Spannung führt zu einem Stromfluss durch die aktive Schicht im jeweiligen Schaltbereich, der wiederum aufgrund des elektrischen Widerstands der nicht-segmentierten Flächenelektrode zu einer Potentialverschiebung derselben führt. Dieser Effekt wird auch als "Ground Shift" bezeichnet. Dadurch wird nun auch eine gewisse Spannung in denjenigen Schaltbereichen erzeugt, die eigentlich nicht geschaltet werden sollen, welche dann ebenfalls ihre optischen Eigenschaften in einem gewissen Maße verändern, ohne dass dies erwünscht ist. Dieser Effekt wird auch als Übersprechen ("Cross Talk") zwischen den Schaltbereichen bezeichnet. Der "Cross Talk" tritt insbesondere deswegen störend in Erscheinung, weil Schaltbereiche, die nicht aktiviert und daher spannungsfrei sein sollen, typischerweise auf das Anschlusspotential der nicht segmentierten Flächenelektrode geschaltet wird (Bezugspotential, "Masse"), um einerseits eine schnelle Entladung der einzelnen Segmente im Falle ihrer Abschaltung zu gewährleisten und andererseits einen Einfluss sogenannter "Schmutzwiderstände" (unerwünschte elektrische Verbindungen aufgrund von Staub oder Feuchtigkeit) zu vermeiden. Dadurch bildet sich ein geschlossener Stromkreislauf durch alle Schaltbereiche aus.

Der "Ground Shift" ist umso ausgeprägter, je größer die Anzahl der aktivierten, also mit einer bewussten Spannung beaufschlagten Schaltbereiche ist. Daher tritt der Effekt des "Cross Talk" insbesondere bei einer hohen Zahl aktivierter Schaltbereiche störend in Erscheinung.

Grundsätzlich wäre es möglich, den "Cross Talk" dadurch zu vermeiden, dass auch die zweite Flächenelektrode durch Isolierungslinien entsprechend der Schaltbereiche segmentiert wird. Sollen jedoch beiden Flächenelektroden in einem Bearbeitungsschritt segmentiert werden, so ist hierfür starke Laserstrahlung erforderlich, welche das ästhetische Erscheinungsbild der Verbundscheibe herabsetzt, beispielsweise infolge von Verbrennungseffekten. Werden die beiden Flächenelektroden alternativ dazu einzeln segmentiert, so ist es schwierig, die Isolierungslinien den beiden Flächenelektroden genau in Deckung zu bringen. Außerdem sind "doppelte" Isolierungslinien in beiden Flächenelektroden stets optisch auffälliger als Isolierungslinien in nur einer Flächenelektrode, selbst wenn sie perfekt in Deckung angeordnet sind.

DE 102017213291 B3 offenbart eine Steuereinheit für eine Verglasungseinheit mit elektrisch steuerbaren optischen Eigenschaften, welche mehrere potentialgetrennte Schaltungsteile aufweist, die phasenversetzt betrieben werden können. DE 102010056203 A1 offenbart ebenfalls eine Steuereinheit für eine Verglasungseinheit mit elektrisch steuerbaren optischen Eigenschaften. Das vorstehend beschriebene Problem des "Ground Shift" und das daraus resultierende Übersprechen zwischen verschiedenen Schaltbereichen werden in diesen Druckschriften nicht thematisiert, eine Lösung nicht vorgeschlagen.

WO 2020152075 A1 offenbart eine Verglasungseinheit mit elektrisch steuerbaren optischen Eigenschaften, wobei das elektrisch steuerbare Funktionselement an zwei Spannungsquellen angeschlossen ist mit unterschiedlicher Maximalspannung, aber gleicher Frequenz und Phase. Die Verglasungseinheit soll ein Beheizen des Funktionselements ermöglichen, um die Abhängigkeit der Schaltcharakteristik von der Temperatur der äußeren Umgebung zu verringern.

Es besteht daher Bedarf an verbesserten Verglasungseinheiten mit elektrisch steuerbaren optischen Eigenschaften mit mehreren unabhängigen Schaltbereichen, bei denen der Effekt des "Cross Talks" zwischen aktivierten und nicht-aktivierten Schaltbereichen vermieden oder zumindest signifikant verringert wird. Der vorliegenden Erfindung liegt die Aufgabe zugrunde, eine solche verbesserte Verglasungseinheit und ein Verfahren zu Ihrer Steuerung bereitzustellen.

Die Aufgabe wird erfindungsgemäß gelöst durch eine Verglasungseinheit mit elektrisch steuerbaren optischen Eigenschaften mit mehreren unabhängigen Schaltbereichen, die eine Verbundscheibe und eine Steuereinheit umfasst. Die Verbundscheibe umfasst eine Außenscheibe und eine Innenscheibe, die über eine thermoplastische Zwischenschicht miteinander verbunden sind, und ein elektrisch steuerbares Funktionselement, welches zwischen der Außenscheibe und der Innenscheibe angeordnet ist. Das Funktionselement weist eine aktive Schicht mit elektrisch steuerbaren optischen Eigenschaften zwischen einer ersten Flächenelektrode und einer zweiten Flächenelektrode auf. Die Steuereinheit ist geeignet, die optischen Eigenschaften des Funktionselements zu steuern. Die erste Flächenelektrode ist durch mindestens eine Isolierungslinie in mindestens zwei getrennte Elektrodensegmente aufgeteilt. Jedes Elektrodensegment der ersten Flächenelektrode und die zweite Flächenelektrode sind elektrisch mit der Steuereinheit verbunden, so dass zwischen jedem Elektrodensegment der ersten Flächenelektrode und der zweiten Flächenelektrode unabhängig voneinander eine elektrische Wechselspannung angelegt werden kann, um die optischen Eigenschaften des dazwischen befindlichen Abschnitts der aktiven Schicht zu steuern.

Erfindungsgemäß ist die Steuereinheit geeignet, zwischen einerseits mindestens zwei Elektrodensegmenten der ersten Flächenelektrode und andererseits der zweiten Flächenelektrode jeweils eine Wechselspannung anzulegen, wobei die Wechselspannungen phasenverschoben sind (eine Phasenverschiebung zueinander aufweisen). Die Eignung der Steuereinheit äußert sich insbesondere darin, dass eine Software hinterlegt ist, welche die erfindungsgemäße Steuerung der Wechselspannungen regelt, und dass sie über die erforderlichen Hardwarekomponenten verfügt, um die Software zu speichern und bestimmungsgemäß auszuführen. Die Softwaresteuerung ist technisch einfach zu realisieren und daher bevorzugt. Alternativ kann die Steuerung der Wechselspannungen aber auch rein durch geeignete Hardwarekomponenten erfolgen. Die Eignung äußert sich dann in entsprechend ausgelegten Hardwarekomponenten. Die Steuereinheit ist insbesondere dazu ausgelegt, zwischen mindestens zwei Elektrodensegmenten der ersten Flächenelektrode einerseits und der zweiten Flächenelektrode andererseits jeweils eine Wechselspannung anzulegen, wobei die Wechselspannungen phasenverschoben sind. Die Steuereinheit ist dementsprechend konfiguriert und die Verglasungseinheit wird in dieser Art betrieben.

Die Aufgabe wird außerdem gelöst durch ein Verfahren zum Steuern einer erfindungsgemäßen Verglasungseinheit mit elektrisch steuerbaren optischen Eigenschaften mit mehreren unabhängigen Schaltbereichen. Das erfindungsgemäße Verfahren zeichnet sich dadurch aus, dass zwischen einerseits mindestens zwei Elektrodensegmenten der ersten Flächenelektrode und andererseits der zweiten Flächenelektrode jeweils eine Wechselspannung angelegt wird, wobei die Wechselspannungen zueinander phasenverschoben sind.

Die Verglasungseinheit und das Verfahren werden im Folgenden gemeinsam vorgestellt, wobei sich Erläuterungen und bevorzugte Ausgestaltungen gleichermaßen auf Verglasungseinheit und Verfahren beziehen. Sind bevorzugte Merkmale im Zusammenhang mit dem Verfahren beschrieben, so ergibt sich daraus, dass auch die Verglasungseinheit bevorzugt entsprechend ausgelegt und geeignet ist. Sind umgekehrt bevorzugte Merkmale im Zusammenhang mit der Verglasungseinheit beschrieben, so ergibt sich daraus, dass auch das Verfahren bevorzugt entsprechend durchgeführt wird.

Der Erfindung liegt die Erkenntnis zugrunde, dass der störende Effekt des "Cross Talk", also das Phänomen, dass ein Schaltzustand aktivierter Schaltbereiche gleichsam auf andere, eigentlich spannungsfreie Schaltbereiche gleichsam ausstrahlt, durch eine Potentialverschiebung des Bezugspotentials der zweiten Flächenelektrode infolge eines Stromflusses in den aktivierten Schaltbereichen hervorgerufen wird. Kern der Erfindung ist nun, die aktivierten Schaltbereiche mit einer phasenverschobenen Wechselspannung zu betreiben, so dass diese Potentialverschiebung durch gegenläufige Ströme vollständig oder zumindest teilweise kompensiert wird. Das unerwünschte Schalten eigentlich nicht-aktivierter Schaltbereiche kann so verhindert oder zumindest reduziert werden. Die erfindungsgemäße Lösung ist außerdem vergleichsweise einfach zu realisieren, weil die Phasen der Wechselspannungen alleine durch die Steuereinheit bestimmt werden können und keine baulichen Änderungen an der Verbundscheibe vorgenommen werden müssen. Das sind große Vorteile der Erfindung.

Die erfindungsgemäße Verbundscheibe umfasst mindestens eine Außenscheibe und eine Innenscheibe, die über eine thermoplastische Zwischenschicht miteinander verbunden sind. Die Verbundscheibe ist dafür vorgesehen, in einer Fensteröffnung (insbesondere einer Fensteröffnung eines Fahrzeugs, alternativ aber auch einer Fensteröffnung eines Gebäudes oder eines Raums) den Innenraum gegenüber der äußeren Umgebung abzutrennen. Mit Innenscheibe wird im Sinne der Erfindung die dem Innenraum zugewandte Scheibe bezeichnet. Mit Außenscheibe wird die der äußeren Umgebung zugewandte Scheibe bezeichnet. Die Außenscheibe und die Innenscheibe weisen jeweils eine außenseitige und eine innenraumseitige Oberfläche auf und eine dazwischen verlaufende, umlaufende Seitenkantenfläche. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die erfindungsgemäße Verbundscheibe enthält ein Funktionselement mit elektrisch steuerbaren optischen Eigenschaften, das zwischen der Außenscheibe und der Innenscheibe angeordnet, also in die Zwischenschicht eingelagert ist. Das Funktionselement ist bevorzugt zwischen mindestens zwei Schichten von thermoplastischem Material der Zwischenschicht angeordnet, wobei es durch die erste Schicht mit der Außenscheibe und durch die zweite Schicht mit der Innenscheibe verbunden ist. Alternativ kann das Funktionselement aber auch direkt auf der zur Zwischenschicht hingewandten Oberfläche der Außenscheibe oder der Innenscheibe angeordnet sein. Bevorzugt ist die Seitenkante des Funktionselements vollständig von der Zwischenschicht umgeben, so dass sich das Funktionselement nicht bis zur Seitenkante der Verbundscheibe erstreckt und somit keinen Kontakt zur umgebenden Atmosphäre hat.

Das Funktionselement umfasst mindestens eine aktive Schicht und zwei Flächenelektroden, die beidseitig der aktiven Schicht angeordnet sind, so dass die aktive Schicht zwischen den Flächenelektroden angeordnet ist. Die Flächenelektroden und die aktive Schicht sind typischerweise im Wesentlichen parallel zu den Oberflächen der Außenscheibe und der Innenscheibe angeordnet. Die aktive Schicht weist die veränderlichen optischen Eigenschaften auf, die durch eine über die Flächenelektroden an die aktive Schicht angelegte elektrische Spannung gesteuert werden können. Unter elektrisch steuerbaren optischen Eigenschaften werden im Sinne der Erfindung insbesondere solche Eigenschaften verstanden, die stufenlos steuerbar sind. Unter dem Schaltzustand des Funktionselements wird dabei im Sinne der Erfindung das Ausmaß bezeichnet, mit dem die optischen Eigenschaften gegenüber dem spannungsfreien Zustand verändert sind. Ein Schaltzustand von 0% entspricht dem spannungsfreien Zustand, ein Schaltzustand von 100% der maximalen Änderung der optischen Eigenschaften. Durch geeignete Wahl der Spannung sind dazwischen stufenlos alle Schaltzustände realisierbar. Ein Schaltzustand von 20% entspricht beispielsweise einer Änderung der optischen Eigenschaften um 20% der maximalen Änderung. Die besagten optischen Eigenschaften betreffen insbesondere die Lichttransmission und/oder das Streuverhalten.

Grundsätzlich ist es aber auch denkbar, dass die elektrisch steuerbaren optischen Eigenschaften nur zwischen zwei diskreten Zuständen geschaltet werden können. Dann existieren nur zwei Schaltzustände nämlich 0% und 100%. Ebenso ist es denkbar, dass die elektrisch steuerbaren optischen Eigenschaften zwischen mehr als zwei diskreten Zuständen geschaltet werden können.

Die Flächenelektroden sind bevorzugt transparent, was im Sinne der Erfindung bedeutet, dass sie eine Lichttransmission im sichtbaren Spektralbereich von mindestens 50% aufweisen, bevorzugt mindestens 70%, besonders bevorzugt mindestens 80%. Die Flächenelektroden enthalten bevorzugt zumindest ein Metall, eine Metalllegierung oder ein transparentes leitfähiges Oxid (*transparent conducting oxide*, TCO). Die Flächenelektroden können beispielsweise auf Basis von Silber, Gold, Kupfer, Nickel, Chrom, Wolfram, Indium-Zinnoxid (ITO), Gallium-dotiertem oder Aluminium-dotiertem Zinkoxid und/oder Fluordotiertem oder Antimon-dotiertem Zinnoxid ausgebildet sein, bevorzugt auf Basis von Silber oder ITO. Die Flächenelektroden weisen bevorzugt eine Dicke von 10 nm bis 2 $\mu$m auf, besonders bevorzugt von 20 nm bis 1 $\mu$m, ganz besonders bevorzugt von 30 nm bis 500 nm.

Die erste Flächenelektrode weist erfindungsgemäß mindestens zwei Segmente (Elektrodensegmente) auf, welche durch eine Isolierungslinie voneinander getrennt sind. Unter der Isolierungslinie wird ein linienartiger Bereich verstanden, in dem das Material der Flächenelektrode nicht vorhanden ist, so dass die angrenzenden Segmente stofflich voneinander getrennt sind und daher elektrisch voneinander isoliert sind. Damit ist gemeint, dass keine direkte elektrische Verbindung zwischen den Elektrodensegmenten besteht, wobei die Elektrodensegmente allerdings über die mit ihnen in Kontakt befindliche aktive Schicht indirekt in gewissem Maße elektrisch leitend miteinander verbunden sein können. Die erste Flächenelektrode kann durch mehrere Isolierungslinien in mehrere Segmente aufgeteilt sein. Jedes Elektrodensegment bildet einen Schaltbereich der Verglasungsanordnung aus. Die Anzahl der Elektrodensegmente kann vom Fachmann den Erfordernissen im Einzelfall entsprechend frei gewählt werden. In einer bevorzugten Ausgestaltung verlaufen die Isolierungslinien im Wesentlichen parallel zueinander und erstrecken sich von einer Seitenkante der Flächenelektrode zur gegenüberliegenden Seitenkante. Es sind aber auch beliebige andere geometrische Formen denkbar.

In einer vorteilhaften Ausgestaltung ist weist die erste Flächenelektrode mindestens drei Elektrodensegmente auf, welche durch jeweils eine Isolierungslinie voneinander getrennt sind. Insgesamt liegen also mindestens zwei Isolierungslinien vor und die Verglasungseinheit weist mindestens drei unabhängige Schaltbereiche auf. Zwar können auch Verglasungseinheiten mit nur zwei Schaltbereichen problemlos nach dem erfindungsgemäßen Prinzip mit phasenverschobener Wechselspannung betrieben werden. Da dann aber kein weitere Schaltbereich vorhanden ist, der einen Schaltzustand von 0% aufweisen kann und auf den sich dann der Effekt des "Cross Talk" störend auswirken könnte, entfaltet die Erfindung in diesem Fall nicht ihr volles Potential. Aus demselben Grund ist das erfindungsgemäße Verfahren in einer Situation besonders vorteilhaft, in der nicht sämtliche Schaltbereiche aktiviert sind, sondern in der mindestens zwei Schaltbereiche einen Schaltzustand größer 0% aufweisen und mindestens ein Schaltbereich einen nominellen Schaltzustand von 0%.

Die Erfindung kann aber auch für solche Verglasungseinheiten angewendet werden, die nur zwei unabhängige Schaltbereiche aufweisen. Ebenso kann das Verfahren auch dann angewendet werden, wenn zwei oder mehr Schaltbereiche vorhanden sind, wobei sämtliche Schaltbereiche aktiviert sind, also einen Schaltzustand größer 0% aufweisen. Insbesondere kann die Präzision eines Schaltzustandes situationsbedingt verbessert werden. Die Potentialverschiebung der zweiten Flächenelektrode hat neben dem besonders störenden "Cross Talk", also der unerwünschten Schaltung eigentlich nicht aktivierter Schaltbereiche, eine weitere negative Auswirkung: da der Spannungsbetrag, also die Differenz zwischen dem Schaltpotential der ersten Flächenelektrode und dem Bezugspotential der zweiten Flächenelektrode infolge der Potentialverschiebung von dem vom Nutzer eingestellten Wert abweicht, wird der gewünschte Schaltzustand mitunter nicht präzise eingestellt - der tatsächliche Schaltzustand weicht vom eingestellten Schaltzustand ab. Dies kann besonders dann störend in Erscheinung treten, wenn der Schaltzustand kleiner als 100% beträgt, der Schaltbereich also gleichsam "gedimmt" ist, weil in diesem Fall eine sehr genaue Einstellung des Spannungswertes erforderlich ist. So kann die Erfindung beispielsweise angewendet werden, um die Präzision eines Schaltzustands größer 0% und kleiner 100% eines Schaltbereichs zu verbessern, indem sich die Beiträge zur Potentialverschiebungen der zweiten Flächenelektrode, die durch die übrigen Schaltbereiche hervorgerufen werden, infolge der Phasenverschiebung gegenseitig kompensieren.

Die Isolierungslinien weisen beispielsweise eine Breite von 5 μm bis 500 μm, insbesondere 20 μm bis 200 μm auf. Sie werden bevorzugt mittels Laserstrahlung in die Flächenelektrode eingebracht. Die Breite der Segmente, also der Abstand benachbarten Isolierungslinien kann vom Fachmann gemäß den Anforderungen im Einzelfall geeignet gewählt werden.

Die zweite Flächenelektrode und die aktive Schicht bilden bevorzugt jeweils eine zusammenhängende, vollständige Schicht, welche nicht durch Isolierungslinien in Segmente aufgeteilt sind. Grundsätzlich ist es aber auch denkbar, dass die zweite Flächenelektrode in geringerem Maße segmentiert ist als die erste Flächenelektrode, also weniger Isolierungslinien und Elektrodensegmente aufweist, so dass mindestens einem Elektrodensegment der zweiten Flächenelektrode mehrere Elektrodensegmente der ersten Flächenelektrode zugeordnet sind. Auch in diesem Fall tritt das Problem des "Cross Talks" auf, was durch den erfindungsgemäßen Ansatz reduziert werden kann. In diesem Fall bezieht sich die erfindungsgemäße technische Lehre auf jedes Segment der zweiten Flächenelektrode mit den ihm zugeordneten Elektrodensegmenten der ersten Flächenelektrode unabhängig von den anderen.

Die Elektrodensegmente der ersten Flächenelektrode sind unabhängig voneinander elektrisch mit der Steuereinheit verbunden, so dass an jedes Elektrodensegment (unabhängig von den anderen Elektrodensegmenten) ein erstes (im Falle einer Wechselspannung zeitlich veränderliches) elektrisches Potential angelegt werden kann, das im Sinne der Erfindung als Schaltpotential bezeichnet wird. Die zweite Flächenelektrode ist ebenfalls elektrisch mit der Steuereinheit verbunden, so dass an die zweite Flächenelektrode insgesamt ein zweites elektrisches Potential angelegt werden kann, das im Sinne der Erfindung als Bezugspotential ("Ground") bezeichnet wird. Sind des erste und das zweite Potential identisch, so liegt im jeweiligen Schaltbereich keine Spannung zwischen den Elektroden an (Schaltzustand 0%). Sind des erste und das zweite Potential unterschiedlich, so liegt im jeweiligen Schaltbereich eine Spannung zwischen den Elektroden an, wodurch ein endlicher Schaltzustand erzeugt wird.

Die Steuereinheit ist dafür vorgesehen und geeignet, die optischen Eigenschaften des Funktionselements zu steuern. Die Steuereinheit ist elektrisch leitend einerseits mit den Flächenelektroden des Funktionselements verbunden und andererseits mit einer Spannungsquelle. Die Spannungsquelle stellt eine Primärspannung bereit. Die Steuereinheit beinhaltet die erforderlichen elektrischen und/oder elektronischen Bauteile, um in Abhängigkeit von einem Schaltzustand die erforderliche Spannung an die Flächenelektroden anzulegen. Der Schaltzustand kann dabei vom Benutzer vorgegeben werden (beispielsweise durch Bedienung eines Schalters, einer Taste oder eines Dreh- oder Schiebereglers), durch Sensoren ermittelt werden und/oder über eine digitale Schnittstelle vom zentralen Steuergerät des Fahrzeugs (falls die Verbundscheibe eine Fahrzeugscheibe ist, üblicherweise LIN-Bus oder CAN-Bus) übermittelt werden. Die Schalter, Tasten, Dreh- oder Schieberegler können beispielsweise in den Armaturen des Fahrzeugs integriert sein, falls die Verbundscheibe eine Fahrzeugscheibe ist. Es können aber auch Berührungsschaltflächen direkt in die Verbundscheibe integriert sein, beispielsweise kapazitive oder resistive Schaltflächen. Alternativ kann das Funktionselement auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden. Die Steuereinheit kann beispielsweise elektronische Prozessoren, Spannungswandler, Transistoren und andere Bauteile umfassen.

Die Spannung, welche an die Flächenelektroden angelegt wird, ist erfindungsgemäß eine Wechselspannung. In einer bevorzugten Ausgestaltung ist die Spannungsquelle eine Gleichspannungsquelle. Die Primärspannung ist also eine Gleichspannung. Diese Situation tritt beispielweise in einem Fahrzeug auf, wenn die Verbundscheibe eine Fahrzeugscheibe ist und die Steuereinheit an die Bordspannung angeschlossen ist. Die Steuereinheit ist dabei bevorzugt an die Bordelektrik angeschlossen, woher sie ihrerseits die elektrische Spannung und optional die Information über den Schaltzustand bezieht. Die Steuereinheit ist dann mit einer Mehrzahl von Wechselrichtern ausgestattet, um die Gleichspannung in die Wechselspannung zu wandeln. Die Anzahl der Wechselrichter entspricht mindestens der Anzahl der Elektrodensegmente der ersten Flächenelektrode, so dass jedem Elektrodensegment ein eigener Wechselrichter zugeordnet ist. Es liegt dabei eine eineindeutige Zuordnung von Wechselrichtern und Elektrodensegmente vor: jedes Elektrodensegment ist an genau einen Wechselrichter angeschlossen und jeder Wechselrichter an genau ein Elektrodensegment. Mit "angeschlossen" ist gemeint, dass die beiden Komponenten elektrisch leitend miteinander verbunden sind, so dass ein elektrisches Potential auf die Elektrode beziehungsweise das Elektrodensegment übertragen werden kann.

Ist die Primärspannung ausreichend hoch zur Steuerung des Funktionselements, so kann sie direkt in die Wechselspannung gewandelt werden. Da die Bordspannung von Fahrzeugen (beispielsweise 12 bis 14 V) typischerweise aber nicht ausreichend ist, um das Funktionselement vollständig zu schalten, ist die Steuereinheit darüber hinaus bevorzugt mit einem Gleichspannungswandler ausgestattet, der geeignet ist, die bereitgestellte Speisespannung (Primärspannung) zu erhöhen, das heißt in eine höhere Sekundärspannung zu wandeln (beispielsweise 65 V). Die Steuereinheit ist an die Gleichspannungsquelle angeschlossen und wird von dieser mit einer Primärspannung versorgt. Die Primärspannung wird durch den Gleichspannungswandler in die höhere Sekundärspannung gewandelt. Die Sekundärspannung wird durch die Wechselrichter in eine Wechselspannung gewandelt (beispielsweise effektiv 48 V), wozu diese geeignet sind. Die Wechselspannung wird dann einerseits an die Elektrodensegmente der ersten Flächenelektrode und andererseits an die zweite Flächenelektrode angelegt.

Die Sekundärspannung beträgt in einer vorteilhaften Ausgestaltung von 65 V bis 70 V, die Wechselspannung von 48 V bis 50 V (jeweils effektiv). Diese Werte sind als Maximalwerte zu verstehen, um einen Schaltzustand von 100% zu erreichen. Um einen Schaltzustand von kleiner 100% zu realisieren, sind dann naturgemäß geringere Spannungen erforderlich.

Erfindungsgemäß werden die Schaltbereiche mit einer unabhängigen Wechselspannung beaufschlagt, wobei die Wechselspannungen unterschiedlicher Schaltbereiche eine Phasenverschiebung zueinander aufweisen können. Dies wird in einer vorteilhaften Ausführung dadurch realisiert, dass das Bezugspotential, mit dem die zweite Flächenelektrode beaufschlagt wird, zeitlich konstant ist. Jedes Elektrodensegment der ersten Flächenelektrode wird mit einem zeitlich veränderlichen Schaltpotential beaufschlagt. Für jeden Schaltbereich ergibt sich die Wechselspannung als zeitlich veränderliche Differenz zwischen Schaltpotential und Bezugspotential. So können Betrag und Phase der Wechselspannung der verschiedenen Schaltbereiche unabhängig voneinander eingestellt werden durch die Wahl von Betrag und Phase des jeweiligen Schaltpotentials.

Die zeitliche Änderung der Schaltpotentiale kann beispielsweise sinusförmig, rechteckförmig oder dreieckförmig sein, wodurch sie eine Sinusspannung, Rechteckspannung beziehungsweise Dreieckspannung ergibt. Besonders bevorzugt sind die verwendeten Wechselspannungen Sinusspannungen, die Schaltpotentiale also sinusartig moduliert. Sinusspannungen sind besonders vorteilhaft hinsichtlich der Stromaufnahme und der elektromagnetischen Kompatibilität.

Die für die einzelnen Schaltbereiche unabhängige Wechselspannung kann auf verschiedene Weise realisiert werden. In einer ersten bevorzugten Ausgestaltung entspricht die Anzahl der Wechselrichter der Anzahl an Elektrodensegmenten der ersten Flächenelektrode. Jeder Wechselrichter ist einerseits an genau ein Elektrodensegment der ersten Flächenelektrode angeschlossen (elektrisch leitend mit dieser verbunden). Jeder Wechselrichter ist andererseits an die zweite Flächenelektrode angeschlossen. Anders ausgedrückt ist jedes Elektrodensegment der ersten Flächenelektrode an jeweils einen eigenen Wechselrichter angeschlossen, der nicht an andere Elektrodensegmente angeschlossen ist, und die zweite Flächenelektrode ist an sämtliche Wechselrichter angeschlossen ist. Das Bezugspotential, welches von den Wechselrichtern an die zweite Flächenelektrode angelegt wird, ist bevorzugt für alle Wechselrichter gleich und zeitlich konstant. Die Schaltpotentiale, welche von den Wechselrichtern an die verschiedenen Elektrodensegmente der ersten Flächenelektrode angelegt werden, sind zeitlich veränderlich und können einen voneinander unabhängigen Betrag und eine voneinander unabhängige Phase aufweisen. So kann die erfindungsgemäße unabhängige Wechselspannung der Schaltbereiche mit der erfindungsgemäßen Phasenverschiebung realisiert werden.

In einer zweiten bevorzugten Ausgestaltung übersteigt die Anzahl der Wechselrichter die Anzahl an Elektrodensegmenten der ersten Flächenelektrode um 1. Beträgt die Anzahl der Elektrodensegmente also m, wobei m eine natürliche Zahl ist, so beträgt die Anzahl der Wechselrichter (m+1). Jedes Elektrodensegment der ersten Flächenelektrode ist jeweils an einen eigenen Wechselrichter angeschlossen (elektrisch leitend mit diesem verbunden), welcher an keines der anderen Elektrodensegmente angeschlossen ist. Die zweite Flächenelektrode ist ebenfalls an einen eigenen Wechselrichter angeschlossen, welcher an keines der Elektrodensegmente der ersten Flächenelektrode angeschlossen ist. Anders ausgedrückt ist jeder Wechselrichter genau einem Elektrodensegment oder genau einer Elektrode zugeordnet und an diese(s) angeschlossen, ausgewählt aus der Gruppe bestehend aus der zweiten Flächenelektrode und sämtlichen Elektrodensegmente der ersten Flächenelektrode. Das Bezugspotential, welches vom Wechselrichter an die zweite Flächenelektrode angelegt wird, ist bevorzugt zeitlich konstant. Die Schaltpotentiale, welche von den anderen Wechselrichtern an die verschiedenen Elektrodensegmente der ersten Flächenelektrode angelegt werden, sind zeitlich veränderlich und können einen voneinander unabhängigen Betrag und eine voneinander unabhängige Phase aufweisen. So kann die erfindungsgemäße unabhängige Wechselspannung der Schaltbereiche mit der erfindungsgemäßen Phasenverschiebung realisiert werden.

Die besagte Anzahl der Wechselrichter der Steuereinheit ist im Sinne der Erfindung auf die tatsächlich verwendeten Wechselrichter bezogen, welche an die Flächenelektroden angeschlossen sind. Es ist also die effektive Anzahl der geschalteten Wechselrichter gemeint. Natürlich ist es denkbar, dass die Steuereinheit weitere Wechselrichter aufweist, welcher aber mit keiner Flächenelektrode verbunden sind und daher keinen Anteil am Schaltungsgeschehen haben. So kann beispielsweise eine Steuereinheit mit einer hohen Anzahl an Wechselrichtern als Standardbauteil vorgehalten werden, wobei dann nur die Anzahl an Wechselrichtern belegt werden, die für die Verglasungseinheit im konkreten Anwendungsfall in Abhängigkeit der Anzahl ihrer Schaltbereiche benötigt werden. Es ist dann nicht erforderlich, die Steuereinheit jeweils für den konkreten Anwendungsfall zu konzipieren.

Das Funktionselement wird durch die Steuereinheit bevorzugt derart betrieben, dass die Elektrodensegmente der ersten Flächenelektrode in denjenigen Schaltbereichen, die einen Schaltzustand von 0% aufweisen sollen, mit einem elektrischen Potential belegt werden, welches dem nominalen Potential der zweiten Flächenelektrode entspricht. Durch die beschriebene Potentialverschiebung der zweiten Flächenelektrode ("Ground Shift") tritt dann der unerwünschte "Cross Talk" in Erscheinung. Bei dieser Art von Schaltung bilden alle Schaltbereiche einen geschlossenen Stromkreis aus unter Beteiligung aller Elektrodensegmente der ersten Flächenelektrode sowie der zweiten Flächenelektrode. Sie ist vorteilhaft im Hinblick auf ein schnelles Schaltverhalten durch eine schnelle Entladung der einzelnen Schaltbereiche. Außerdem wird ein störender Einfluss sogenannter "Schmutzwiderstände" (unerwünschte elektrische Verbindungen aufgrund von Staub oder Feuchtigkeit) vermieden.

Erfindungsgemäß soll die Potentialverschiebung des Bezugspotentials ("Ground Shift") durch gegenläufige Ströme vermieden oder verringert werden, wobei die gegenläufigen Ströme durch Phasenverschiebungen der Wechselspannungen der aktiven Schaltbereiche (also der Schaltbereiche, in denen ein Schaltzustand größer 0% gewünscht ist) bewerkstelligt wird. Dieses Prinzip kann auf unterschiedliche Art und Weise realisiert werden.

In einer ersten bevorzugten Ausführung werden die aktiven Schaltbereiche in zwei Gruppen unterteilt, die jeweils mit einer Wechselspannung gleicher Phase betrieben werden, wobei die Wechselspannungen der beiden Gruppen eine Phasenverschiebung von 180° zueinander aufweisen. Ist die Anzahl aktiver Schaltbereiche gerade, so werden die beiden Gruppen gleich groß gewählt, so dass sich die gegenläufigen Ströme ideal kompensieren und der "Ground Shift" vermieden wird. Dies gilt zumindest für den Fall, dass die (summierten) Schaltzustände der beiden Gruppen gleich sind und daher auch der (summierte) Betrag der Wechselspannungen. Weist eine Gruppe einen höheren Spannungsbetrag auf infolge eines höheren Schaltzustands, so verbleibt ein effektiver Reststrom, der nicht kompensiert wird und seinerseits zu einem "Ground Shift" führt. Dieser "Ground Shift" ist aber deutlich geringer ausgeprägt, als wenn alle Schaltbereiche mit Wechselstrom der gleichen Phase betrieben würden. Ist die Anzahl aktiver Schaltbereiche ungerade, so werden die Gruppen derart gewählt, dass eine Gruppe genau einen Schaltbereich mehr aufweist als die andere Gruppe. Unter der Annahme gleicher Schaltzustände und Spannungsbeträge für alle Schaltbereiche werden dann die Ströme aller Schaltbereiche der größeren Gruppe durch die gegenläufigen Ströme der Schaltbereiche der kleineren Gruppen kompensiert, bis auf genau einen. Der nicht kompensierte Strom dieses einen Schaltbereichs der größeren Gruppe führt dann zwar zu einem effektiven verbleibenden "Ground Shift", der allerdings deutlich geringer ausgeprägt ist, als wenn alle Schaltbereiche mit Wechselstrom der gleichen Phase betrieben würden - der "Ground Shift" wird also signifikant reduziert.

In der besagten ersten bevorzugten Ausführung wird also zwischen einerseits $n$ Elektrodensegmenten der ersten Flächenelektrode und andererseits der zweiten Flächenelektrode jeweils eine Wechselspannung angelegt, um einen endlichen Schaltzustand größer 0% zu erzeugen. $n$ ist hierbei eine ganze Zahl größer Null und entspricht der Anzahl der aktiven Schaltbereiche. Die $n$ Elektrodensegmente sind die Elektrodensegmente dieser aktiven Schaltbereiche. Falls *n* eine gerade Zahl ist, wird zwischen einerseits $n/2$ Elektrodensegmenten der ersten Flächenelektrode und andererseits der zweiten Flächenelektrode eine Wechselspannung mit einer ersten Phase angelegt. Ebenso wird zwischen einerseits den übrigen $n/2$ Elektrodensegmenten der ersten Flächenelektrode und andererseits der zweiten Flächenelektrode eine Wechselspannung mit einer zweiten Phase angelegt. Falls *n* eine ungerade Zahl ist, wird zwischen einerseits $(n+1)/2$ Elektrodensegmenten der ersten Flächenelektrode und andererseits der zweiten Flächenelektrode eine Wechselspannung mit einer ersten Phase angelegt. Ebenso wird zwischen einerseits den übrigen $(n-1)/2$ Elektrodensegmenten der ersten Flächenelektrode und andererseits der zweiten Flächenelektrode eine Wechselspannung mit einer zweiten Phase angelegt. Die erste Phase und die zweite Phase weisen in beiden Fällen eine Phasenverschiebung von 180° auf.

Die besagte Phasenverschiebung von 180° ist optimal und führt zu einer vollständigen Kompensation gegenläufiger Ströme. Aber auch bei leichten Abweichungen von diesem optimalen Wert kann eine signifikante Verbesserung erreicht werden. Die Phasenverschiebung beträgt dabei bevorzugt von 150° bis 210°, besonders bevorzugt von 160° bis 200°, ganz besonders bevorzugt von 170° bis 190° und idealerweise 180°.

Die vorstehenden Ausführungen gelten streng genommen nur für den Fall, dass alle Schaltbereiche die gleiche Größe aufweisen, weil die für einen bestimmten Schaltzustand erforderliche Spannung auch von der Größe und der Geometrie des Schaltbereichs abhängt. In typischen Anwendungssituationen ist dies zumindest näherungsweise der Fall. Sollte die Fläche der Schaltbereiche dagegen sehr unterschiedlich sein, so können die Gruppen anders aufgeteilt werden, um nach dem erfindungsgemäßen Prinzip eine möglichst gute Kompensation der Beiträge zum "Ground Shift" zu erreichen, wobei beispielsweise mehrere kleinere Schaltbereiche zusammengefasst werden, um einen größeren Schaltbereich zu kompensieren.

Es ist möglich, dass die besagten Gruppen von Schaltbereichen durch die Steuereinheit software-gesteuert für jede Schaltsituation gebildet werden in einer Weise, dass die Größe der Gruppen den vorstehend beschriebenen Regeln genügt. Bei einer Änderung der Schaltsituation, beispielsweise hervorgerufen durch eine Nutzereingabe, ermittelt die Steuereinheit die Anzahl zu aktivierender Schaltbereiche und teilt diese in die Gruppen auf, um eine Kompensation der Stromflüsse und dadurch eine Vermeidung oder Verringerung der Potentialverschiebung der zweiten Flächenelektrode zu erreichen. Da aber in typischen Anwendungssituationen üblicherweise benachbarte Schaltbereiche aktiviert werden, können die Schaltbereiche alternativ von vornherein fest in die besagten Gruppen eingeteilt werden und den Elektrodensegmente eine feste Phase zugeordnet werden. Dies gilt insbesondere für den Fall, dass sich die Elektrodensegmente von einer Seitenkante des Funktionselements zur gegenüberliegenden Seitenkante erstrecken und im Wesentlichen parallel zueinander angeordnet sind. Bildet das Funktionselement beispielsweise eine elektrisch steuerbare Sonnenblende einer Windschutzscheibe aus, so wird der Nutzer in der Regel einen zusammenhängenden Bereich des Funktionselements, welcher an die der Oberkante der Windschutzscheibe zugewandten Seitenkante des Funktionselements grenzt, abdunkeln beziehungsweise mit einer hohen Lichtstreuung versehen, dessen Höhe abhängig vom Sonnenstand ist. Das Funktionselement ist dann aufgeteilt in einen ersten zusammenhängenden Bereich angrenzend an die der Oberkante zugewandten Seitenkante, der durch einander benachbarte aktivierte Schaltbereiche gebildet wird, und einen zweiten zusammenhängenden Bereich angrenzend an die von der Oberkante abgewandten Seitenkante, der durch einander benachbarte nicht-aktivierte Schaltbereiche gebildet wird. Eine ähnliche Situation tritt beispielsweise bei einer Dachscheibe auf, die über Schaltbereiche verfügt, die jeweils zwischen den Seitenkanten der Dachscheiben verlaufen und einen unterschiedlichen Abstand zur Vorderkante beziehungsweise Hinterkante aufweisen. Auch hier wird typischerweise in Abhängigkeit vom Sonnenstand ein erster zusammenhängender Bereich vorliegen, der der Vorderkante der Dachscheibe zugewandt ist und durch einander benachbarte aktivierte (beziehungsweise nicht-aktivierte) Schaltbereiche gebildet wird, und ein zweiter zusammenhängender Bereich, der der Hinterkante der Dachscheibe zugewandt ist und durch einander benachbarte nicht-aktivierte (beziehungsweise aktivierte) Schaltbereiche gebildet wird. Es ist daher möglich, jedem Elektrodensegment der ersten Flächenelektrode eine feste Phase der Wechselspannung zuzuordnen, wobei die Wechselspannungen benachbarter Elektrodensegmente (beziehungsweise Schaltbereiche) jeweils um 180° phasenverschoben sind. Die Wechselspannungen zwischen einerseits direkt benachbarten Elektrodensegmenten der ersten Flächenelektrode und andererseits der zweiten Flächenelektrode weisen also jeweils eine Phasenverschiebung von 180° auf. Ein Vorteil der Phasenverschiebung benachbarter Elektrodensegmente liegt auch in einer gleichmäßigeren Verteilung der Phasen, was aufgrund der Tatsache, dass der "Ground Shift" der zweiten Flächenelektrode nicht homogen ist, sondern räumlich unterschiedlich verteilt.

Für den Fall, dass die aktivierten Schaltbereiche stark unterschiedliche Schaltzustände aufweisen, ist es in einer Weiterbildung der besagten ersten bevorzugten Ausführung denkbar, die besagten Gruppen aus Schaltbereichen (beziehungsweise Elektrodensegmenten) nicht anhand der vorstehend beschriebenen Regeln zu bilden, sondern in Abhängigkeit von den Schaltzuständen und dafür erforderlichen Spannungsbetragen flexibel derart zu bilden, dass der summierte Spannungsbetrag jeder Gruppe möglichst ähnlich ist. Die Zuteilung erfolgt dabei also nicht nach Anzahl der Schaltbereiche derart, dass die Gruppen die gleiche oder eine möglichst ähnliche Anzahl von Schaltbereichen umfasst. Stattdessen werden die Gruppen derart zugeteilt, dass die geringstmögliche Differenz zwischen den summierten Spannungsbeträgen der beiden Gruppen auftritt. Es würde beispielsweise mehrere Schaltbereiche mit geringem Schaltzustand zu einer Gruppe zusammengefasst, um einen einzelnen Schaltbereich mit hohem Schaltzustand zu kompensieren. Auch eine unterschiedliche Größe der Schaltbereich kann dabei berücksichtigt werden. Diese Zuteilung kann softwaregesteuert erfolgen und stellt auch bei stark unterschiedlichen Schaltzuständen (und/oder stark unterschiedlichen Größen) der einzelnen Schaltbereiche eine optimale Kompensation der "Ground Shift" durch gegenläufige Ströme ähnlicher Stärke sicher.

In einer zweiten bevorzugten Ausführung werden alle aktiven Schaltbereiche jeweils mit Wechselspannung einer eigenen (das heißt von den anderen Schaltbereichen verschiedenen) Phase betrieben. Es existiert also eine Phasenverschiebung zwischen jedem beliebigen herausgegriffenen Paar an Schaltbereichen. Die Phasenverschiebung wird dabei in Abhängigkeit von der Anzahl der aktiven Schaltbereiche gewählt - sie beträgt 360° geteilt durch die Anzahl der Schaltbereiche beziehungsweise ein ganzzahliges Vielfachens davon. Der "Ground Shift" wird dann vermieden, weil die Ströme ideal kompensiert werden. Dies gilt zumindest für den Fall, dass die Schaltzustände der verschiedenen Schaltbereiche gleich sind und daher auch der Betrag der Wechselspannungen. Ansonsten werden die Ströme nur teilweise kompensiert, der "Ground Shift" aber dennoch zumindest signifikant verringert. Die Kompensation ist insbesondere dann ideal, wenn die Wechselspannung eine Sinusspannung ist.

In der besagten zweiten bevorzugten Ausführung wird also zwischen einerseits $n$ Elektrodensegmenten der ersten Flächenelektrode und andererseits der zweiten Flächenelektrode jeweils eine Wechselspannung mit einer eigenen (das heißt von den anderen Elektrodensegmenten verschiedenen) Phase angelegt, um einen endlichen Schaltzustand größer 0% zu erzeugen. $n$ ist wiederum eine ganze Zahl und entspricht der Anzahl der aktiven Schaltbereiche. Die Wechselspannungen weisen untereinander eine Phasenverschiebung von $360°/n$ oder einem ganzzahligen Vielfachen davon auf. Es tritt also keine Phase mehrfach auf, das heißt für mehr als ein Elektrodensegment. Zu jedem Elektrodensegment existiert genau ein Elektrodensegment mit einer Phasenverschiebung von $360°/n$ und (sofern n größer 2) genau ein Elektrodensegment mit einer Phasenverschiebung von $2*360°/n$ und (sofern n größer 3) genau ein Elektrodensegment mit einer Phasenverschiebung von $3*360°/n$ und so weiter. Die Phasenverschiebung $\Delta\phi_i$ der Wechselspannung des i-ten Elektrodensegments gegenüber derjenigen des ersten aktiven Elektrodensegments berechnet sich, allgemein ausgedrückt, aus $\Delta\phi_i = \frac{i-1}{n} \times 360°$, wobei n die Gesamtzahl aktiver Segmente ist.

Aufgrund der räumlichen Inhomogenität des "Ground Shift" ist es vorteilhaft, wenn die Phasen benachbarter Segmente möglichst unterschiedlich ausfallen. Die Phasenverschiebungen werden also derart gewählt, dass die Phasenverschiebungen jeweils benachbarter Segmente maximal ausfallen. Die Phasenverschiebung $\Delta\phi_i$ der Wechselspannung des i-ten Elektrodensegments gegenüber derjenigen des ersten aktiven Elektrodensegments berechnet sich dann in einer weiteren bevorzugten Ausführung aus $\Delta\phi_i = \left( \left[ \frac{i-1}{2} \right] + (i \bmod 2) \times \left[ \frac{n}{2} \right] \right) \times 360°$, wobei $n$ die Gesamtzahl aktiver Segmente ist und $i$ deren Nummerierung in räumlicher Reihenfolge. "mod" bezeichnet die Modulo-Operation. Es ist grundsätzlich aber auch möglich, dass die Phasenverschiebung benachbarter aktivierter Schaltbereiche jeweils $360°/n$ beträgt, während nicht direkt benachbarte Schaltbereiche eine Phasenverschiebung aufweisen, die einem Vielfachen von $360°/n$ entspricht.

Die besagte Phasenverschiebung von $360°/n$ ist optimal und führt zu einer vollständigen Kompensation gegenläufiger Ströme. Aber auch bei leichten Abweichungen von diesem optimalen Wert kann eine signifikante Verbesserung erreicht werden. Die Phasenverschiebung beträgt dabei bevorzugt von $330°/n$ bis $390°/n$, besonders

bevorzugt von $\frac{340°}{n}$ bis $\frac{380°}{n}$, ganz besonders bevorzugt von $\frac{350°}{n}$ bis $\frac{370°}{n}$ und idealerweise $\frac{360°}{n}$.

Im Falle einer großen Anzahl aktivierter Schaltbereiche ist es in einer Weiterbildung der besagten zweiten bevorzugten Ausführung möglich, die aktivierten Schaltbereiche in mehr als zwei Gruppen aufzuteilen, wobei alle Gruppen bevorzugt die gleiche Anzahl an Schaltbereichen aufweisen oder zumindest eine möglichst ähnliche Anzahl, so dass sich die Anzahl der Schaltbereiche unterschiedlicher Gruppen um höchstens 1 unterscheidet. Jede Gruppe wird mit einer Wechselspannung derselben Phase betrieben, und die Wechselspannungen unterschiedlicher Gruppen weisen eine Phasenverschiebung auf, welche 360° geteilt durch die Anzahl der Gruppen entspricht oder einem ganzzahligen Vielfachen davon. Auch so kann eine gute Kompensation des "Ground Shift" erreicht werden. Besonders vorteilhaft ist es dabei aufgrund der bereits erwähnten räumlichen Inhomogenität des "Ground Shift", die Gruppen derart zu wählen, dass ihre Mitglieder einen räumlich möglichst großen Abstand zueinander aufweisen.

Bei beiden bevorzugten Ausführungen wird ein optimaler Effekt erreicht, wenn alle Schaltbereiche die gleiche Größe aufweisen, weil die für einen bestimmten Schaltzustand erforderliche Spannung auch von der Größe und der Geometrie des Schaltbereichs abhängt. In typischen Anwendungssituationen ist dies zumindest näherungsweise der Fall. Es ist daher besonders vorteilhaft, wenn alle Schaltbereiche zumindest annähernd die gleiche Fläche aufweisen, wobei die Fläche der einzelnen Schaltbereich beispielswiese um höchstens 20%, bevorzugt höchstens 10% vom Mittelwert der Flächen aller Schaltbereiche abweicht.

Ebenso wird bei beiden bevorzugten Ausführungen ein optimaler Effekt erreicht, wenn alle Schaltbereiche mit einer Wechselspannung gleicher Amplitude betrieben werden, was daher ebenfalls einen vorteilhaften Fall darstellt.

Es können verschiedenartige Funktionselemente verwendet werden, sofern sie mit Wechselspannung betrieben werden. In einer bevorzugten Ausgestaltung ist das Funktionselement ein PDLC-Funktionselement (*polymer dispersed liquid crystal*). Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Es können aber auch andere Funktionselemente verwendet werden, deren Veränderlichkeit der optischen Eigenschaften auf Flüssigkristallen basiert, beispielsweise PNLC-Funktionselemente (*polymer networked liquid crystal*).

In einer weiteren bevorzugten Ausgestaltung ist das Funktionselement ein SPD-Funktionselement (*suspended particle device*). Dabei enthält die aktive Schicht suspendierte Partikel, wobei die Absorption von Licht durch die aktive Schicht mittels Anlegen einer Spannung an die Flächenelektroden veränderbar ist.

Die erwähnten regelbaren Funktionselemente und deren Funktionsweise sind dem Fachmann an sich bekannt, so dass an dieser Stelle auf eine ausführliche Beschreibung verzichtet werden kann.

In einer vorteilhaften Ausgestaltung umfasst das Funktionselement außer der aktiven Schicht und den Flächenelektroden zwei Trägerfolien, wobei die aktive Schicht und die Flächenelektroden bevorzugt zwischen den Trägerfolien angeordnet sind. Die Trägerfolien sind bevorzugt aus thermoplastischem Material ausgebildet, beispielsweise auf Basis von Polyethylenterephthalat (PET), Polypropylen, Polyvinylchlorid, fluorinierte Ethylen-Propylene, Polyvinylfluorid oder Ethylen-Tetrafluorethylen, besonders bevorzugt auf Basis von PET. Die Dicke der Trägerfolien beträgt bevorzugt von 10 μm bis 200 μm. Solche Funktionselemente können vorteilhaft als Mehrschichtfolien bereitgestellt werden, insbesondere käuflich erworben werden, in der gewünschten Größe und Form zurechtgeschnitten werden und dann in die Verbundscheibe einlaminiert werden, bevorzugt über jeweils eine thermoplastische Verbindungsschicht mit der Außenscheibe und der Innenscheibe. Es ist möglich, die erste Flächenelektrode durch Laserstrahlung zu segmentieren, auch wenn sie in einer solche Mehrschichtfolie eingelagert ist. Durch die Laserbearbeitung kann eine dünne, optisch unauffällige Isolierungslinie erzeugt werden, ohne die typischerweise darüber liegende Trägerfolie zu beschädigen.

Die Seitenkante des Funktionselements kann versiegelt werden, beispielsweise durch Verschmelzen der Trägerschichten oder durch ein (bevorzugt polymeres) Band. So kann die aktive Schicht geschützt werden, insbesondere davor, dass Bestandteile der Zwischenschicht (insbesondere Weichmacher) in die aktive Schicht hineindiffundieren, was zu einer Degradation des Funktionselements führen kann.

Zur elektrischen Kontaktierung der Flächenelektroden beziehungsweise Elektrodensegmente sind diese bevorzugt mit sogenannten Flach- oder Folienleitern verbunden, welche sich aus der Zwischenschicht über die Seitenkante der Verbundscheibe hinaus erstrecken. Flachleiter weisen als leitfähigen Kern eine bandartige metallische Schicht auf, welche typischerweise mit Ausnahme der Kontaktflächen von einer polymeren Isolationsummantelung umgeben ist. Optional können sogenannte Sammelleiter (*bus bars*), beispielsweise Streifen einer elektrisch leitfähigen Folie (beispielsweise Kupferfolie) oder elektrisch leitfähige Aufdrucke, auf den Flächenelektroden angeordnet sein, wobei die Flach- oder Folienleiter mit diesen Sammelleitern verbunden sind. Die Flach- oder Folienleiter sind direkt oder über weitere Leiter an die Steuereinheit angeschlossen.

Die Steuereinheit ist in einer vorteilhaften Ausgestaltung an der innenraumseitigen, von der Zwischenschicht abgewandten Oberfläche der Innenscheibe befestigt. Die Steuereinheit kann beispielsweise direkt an die Oberfläche der Innenscheibe angeklebt sein. In einer vorteilhaften Ausgestaltung ist die Steuereinheit in ein Befestigungselement eingesetzt, welches wiederum an der innenraumseitigen Oberfläche der Innenscheibe befestigt ist, bevorzugt über eine Schicht eines Klebstoffs. Solche Befestigungselemente sind im Fahrzeugbereich auch als "Brackets" bekannt und typischerweise aus Kunststoff gefertigt. Durch die Anbringung der Steuereinheit direkt an der Verbundscheibe wird der elektrische Anschluss derselben erleichtert. Insbesondere sind keine langen Kabel zwischen Steuereinheit und Funktionselement erforderlich.

Alternativ ist es aber auch möglich, dass die Steuereinheit nicht an der Verbundscheibe befestigt ist, sondern beispielsweise im elektrischen System des Fahrzeugs integriert ist oder an der Fahrzeugkarosserie befestigt ist, falls die Verbundscheibe eine Fahrzeugscheibe ist. Die Steuereinheit ist bevorzugt im Innenraum des Fahrzeugs derart angeordnet, dass sie nicht sichtbar ist, beispielsweise im Armaturenbrett oder hinter einer Wandverkleidung.

Der Verbundscheibe kann mit einem opaken Abdeckdruck ausgestattet sein, insbesondere in einem umlaufenden Randbereich, wie es im Fahrzeugbereich insbesondere für Windschutzscheiben, Heckscheiben und Dachscheiben üblich ist. Der Abdeckdruck ist typischerweise aus einer Emaille gebildet, enthaltend Glasfritten und ein Pigment, insbesondere Schwarzpigment. Die Druckfarbe wird typischerweise im Siebdruckverfahren aufgebracht und eingebrannt. Ein solcher Abdeckdruck ist auf mindestens einer der Scheibenoberflächen aufgebracht, bevorzugt der innenraumseitigen Oberfläche der Außenscheibe und/oder der Innenscheibe. Der Abdeckdruck umgibt bevorzugt einen zentralen Durchsichtsbereich rahmenartig und dient insbesondere dem Schutz des Klebstoffs, durch den die Verbundscheibe mit der Fahrzeugkarosserie verbunden ist, vor UV-Strahlung. Ist die Steuereinheit an der innenraumseitigen Oberfläche der Innenscheibe angebracht, dann bevorzugt im opaken Bereich des Abdeckdrucks.

Die thermoplastische Zwischenschicht dient der Verbindung der beiden Scheiben, wie es bei Verbundscheiben üblich ist. Typischerweise werden thermoplastische Folien verwendet und die Zwischenschicht aus diesen ausgebildet. In einer bevorzugten Ausgestaltung ist die Zwischenschicht zumindest aus einer ersten thermoplastischen Schicht und einer zweiten thermoplastischen Schicht gebildet, zwischen denen das Funktionselement angeordnet ist. Das Funktionselement ist dann über einen Bereich der ersten thermoplastischen Schicht mit der Außenscheibe und über einen Bereich der zweiten thermoplastischen Schicht mit der Innenscheibe verbunden. Bevorzugt ragen die thermoplastischen Schichten umlaufend über das Funktionselement hinaus. Dort wo die thermoplastischen Schichten direkten Kontakt miteinander haben und nicht durch das Funktionselement voneinander getrennt sind, können sie beim Laminieren derart verschmelzen, dass die ursprünglichen Schichten unter Umständen nicht mehr erkennbar sind und stattdessen eine homogene Zwischenschicht vorliegt.

Eine thermoplastische Schicht kann beispielsweise durch eine einzige thermoplastische Folie ausgebildet werden. Eine thermoplastische Schicht kann auch aus Abschnitten unterschiedlicher thermoplastischer Folien gebildet werden, deren Seitenkanten aneinandergesetzt sind.

In einer bevorzugten Ausgestaltung ist das Funktionselement, genauer die Seitenkanten des Funktionselements umlaufend von einer dritten thermoplastischen Schicht umgeben. Die dritte thermoplastische Schicht ist rahmenartig ausgebildet mit einer Aussparung, in welche das Funktionselement eingelegt wird. Die dritte thermoplastische Schicht kann durch eine thermoplastische Folie gebildet werden, in welche die Aussparung durch Ausschneiden eingebracht worden ist. Alternativ kann die dritte thermoplastische Schicht auch aus mehreren Folienabschnitten um das Funktionselement zusammengesetzt werden. Die Zwischenschicht ist dann aus insgesamt mindestens drei flächig aufeinander angeordneten thermoplastischen Schichten gebildet, wobei die mittlere Schicht eine Aussparung ausweist, in der das Funktionselement angeordnet ist. Bei der Herstellung wird die dritte thermoplastische Schicht zwischen der ersten und der zweiten thermoplastischen Schicht angeordnet, wobei die Seitenkanten aller thermoplastischen Schichten bevorzugt in Deckung befindlich sind. Die dritte thermoplastische Schicht weist bevorzugt etwa die gleiche Dicke auf wie das Funktionselement. Dadurch wird der lokale Dickenunterschied, der durch das örtlich begrenzte Funktionselement eingebracht wird, kompensiert, so dass Glasbruch beim Laminieren vermieden werden kann und ein verbessertes optisches Erscheinungsbild entsteht.

Die Schichten der Zwischenschicht sind bevorzugt aus demselben Material ausgebildet, können prinzipiell aber auch aus unterschiedlichen Materialien ausgebildet sein. Die Schichten beziehungsweise Folien der Zwischenschicht sind bevorzugt auf Basis von Polyvinylbutyral (PVB), Ethylenvinylacetat (EVA), oder Polyurethan (PU). Das bedeutet, dass die Schicht beziehungsweise Folie mehrheitlich das besagte Material enthält (Anteil von größer als 50 Gew.-%) und daneben optional weitere Bestandteile enthalten kann, beispielsweise Weichmacher, Stabilisatoren, UV- oder IR-Absorber. Die Dicke jeder thermoplastischen Schicht beträgt bevorzugt von 0,2 mm bis 2 mm, besonders bevorzugt von 0,3 mm bis 1 mm. Beispielsweise können Folien mit den Standarddicken von 0,38 mm oder 0,76 mm verwendet werden.

Die Außenscheibe und die Innenscheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat. Die Scheiben können klar sein oder auch getönt oder gefärbt. Je nach Anwendungsfall können dem Grad der Tönung oder Färbung Grenzen gesetzt sein: so muss mitunter eine vorgeschriebene Lichttransmission gewährleistet sein, beispielsweise eine Lichttransmission von mindestens 70 % im Haupt-Durchsichtbereich A gemäß der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge").

Die Außenscheibe, die Innenscheibe und/oder die Zwischenschicht können geeignete, an sich bekannte Beschichtungen aufweisen, beispielsweise Antireflexbeschichtungen, Antihaftbeschichtungen, Antikratzbeschichtungen, photokatalytische Beschichtungen, UVabsorbierende oder reflektierende Beschichtungen oder IR-absorbierende oder - reflektierende Beschichtungen wie Sonnenschutzbeschichtungen oder Low-E-Beschichtungen.

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Die Erfindung umfasst außerdem die Verwendung einer erfindungsgemäßen Verglasungseinheit, insbesondere der Verbundscheibe einer erfindungsgemäßen Verglasungseinheit, in Gebäuden oder in Fortbewegungsmitteln für den Verkehr auf dem Lande, in der Luft oder zu Wasser, bevorzugt als Fensterscheibe eines Fahrzeugs, insbesondere eines Kraftfahrzeugs. Die Verglasungseinheit kann beispielweise verwendet werden als Windschutzscheibe, Dachscheibe, Rückwandscheibe oder Seitenscheibe.

In einer besonders bevorzugten Ausgestaltung ist die Verglasungseinheit beziehungsweise die Verbundscheibe eine Windschutzscheibe eines Fahrzeugs. Das Funktionselement wird dabei bevorzugt als elektrisch steuerbare Sonnenblende eingesetzt, welche in einem oberen Bereich der Windschutzscheibe angeordnet ist, während der Großteil der Windschutzscheibe nicht mit dem Funktionselement versehen ist. Die Schaltbereiche sind bevorzugt im Wesentlichen parallel zur Oberkante der Windschutzscheibe mit wachsendem Abstand zu dieser angeordnet. Durch die unabhängig schaltbaren Schaltbereiche kann der Benutzer in Abhängigkeit vom Sonnenstand das Ausmaß des an die Oberkante grenzenden Bereichs bestimmen, der abgedunkelt oder mit einer hohen Lichtstreuung versehen werden soll, um eine Blendwirkung durch die Sonne zu vermeiden.

In einer weiteren bevorzugten Ausgestaltung ist die Verglasungseinheit beziehungsweise die Verbundscheibe eine Dachscheibe eines Fahrzeugs. Das Funktionselement ist dabei bevorzugt im gesamten Durchsichtbereich der Verbundscheibe angeordnet. In einer typischen Ausgestaltung umfasst dieser Durchsichtbereich die gesamte Verbundscheibe abzüglich eines umlaufenden Randbereichs, der mit einem opaken Abdeckdruck auf mindestens einer der Oberfläche der Scheiben versehen ist. Das Funktionselement erstreckt sich über den gesamten Durchsichtbereich, wobei seine Seitenkanten im Bereich des opaken Abdeckdrucks angeordnet und dadurch für den Betrachter nicht sichtbar sind. Die Schaltbereiche sind bevorzugt im Wesentlichen parallel zur Vorderkante der Dachscheibe mit wachsendem Abstand zu dieser angeordnet. Durch die unabhängig schaltbaren Schaltbereiche kann der Benutzer festlegen, welche Bereich der Dachscheibe transparent sein sollen und welche abgedunkelt oder mit einer hohen Lichtstreuung versehen werden sollen, beispielsweise in Abhängigkeit vom Sonnenstand, um eine übermäßige Erwärmung des Fahrzeuginnenraums zu vermeiden. Es ist auch möglich, dass jedem Fahrzeuginsassen, also beispielsweise dem Fahrer, dem Beifahrer, dem linken und dem rechten hinteren Insassen, jeweils ein über ihm befindlicher Schaltbereich zugeordnet ist.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:

Fig. 1   eine Draufsicht auf eine Ausgestaltung der erfindungsgemäßen Verglasungseinheit,
Fig. 2   einen Querschnitt durch die Verglasungseinheit aus Figur 1,
Fig. 3   eine vergrößerte Darstellung des Bereichs Z aus Figur 2,
Fig. 4   das Funktionselement der Verglasungseinheit aus Figur 1 in einem Ersatzschaltbild,
Fig. 5   Ersatzschaltbild einer alternativen Ausgestaltung der Steuereinheit,
Fig. 6   ein Diagramm beispielhafter Potentiale zur Erzeugung einer unabhängigen Wechselspannung in zwei Schaltbereichen,
Fig. 7   ein Diagramm beispielhafter unabhängiger Wechselspannungen in drei Schaltbereichen in einer erfindungsgemäßen Ausführung und
Fig. 8   ein Diagramm beispielhafter unabhängiger Wechselspannungen in drei Schaltbereichen in einer weiteren erfindungsgemäßen Ausführung.

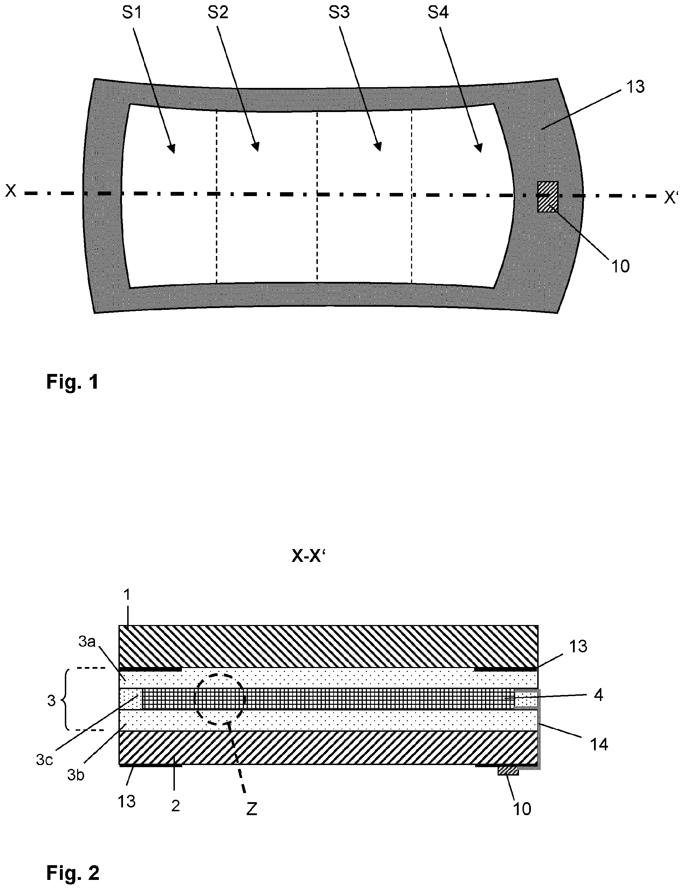

Figur 1, Figur 2, Figur 3 und Figur 4 zeigen je ein Detail einer erfindungsgemäßen Verglasungseinheit mit elektrisch steuerbaren optischen Eigenschaften, umfassend eine Verbundscheibe und eine Steuereinheit 10. Die Verbundscheibe ist beispielhaft als Dachscheibe eines Personenkraftwagens vorgesehen, deren Lichttransmission bereichsweise elektrisch gesteuert werden kann. Die Verbundscheibe umfasst eine Außenscheibe 1 und eine Innenscheibe

2, die über eine Zwischenschicht 3 miteinander verbunden sind. Die Außenscheibe 1 und die Innenscheibe 2 bestehen aus Kalk-Natron-Glas, welches optional getönt sein kann. Die Außenscheibe 1 weist beispielsweise eine Dicke von 2,1 mm auf, die Innenscheibe 2 eine Dicke von 1,6 mm.

Die Zwischenschicht 3 umfasst insgesamt drei thermoplastischen Schichten 3a, 3b, 3c, die jeweils durch eine thermoplastische Folie mit einer Dicke von 0,38 mm aus PVB ausgebildet sind. Die erste thermoplastische Schicht 3a ist mit der Außenscheibe 1 verbunden, die zweite thermoplastische Schicht 3b mit der Innenscheibe 2. Die dazwischenliegende dritte thermoplastische Schicht 3c weist einen Ausschnitt auf, in welchen ein Funktionselement 4 mit elektrisch steuerbaren optischen Eigenschaften im Wesentlichen passgenau, das heißt an allen Seiten etwa bündig, eingelegt ist. Die dritte thermoplastische Schicht 3c bildet also gleichsam eine Art Passepartout oder Rahmen für das etwa 0,4 mm dicke Funktionselement 4, welches somit rundum in thermoplastisches Material eingekapselt und dadurch geschützt ist. Das Funktionselement 4 ist beispielsweise eine PDLC-Mehrschichtfolie, die von einem klaren, transparenten Zustand in einen trüben, nicht-transparenten (diffusen) Zustand geschaltet werden kann. Das Funktionselement 4 ist eine Mehrschichtfolie, bestehend aus einer aktiven Schicht 5 zwischen zwei Flächenelektroden 8, 9 und zwei Trägerfolien 6, 7. Die aktive Schicht 5 enthält eine Polymermatrix mit darin dispergierten Flüssigkristallen, die sich in Abhängigkeit der an die Flächenelektroden 8, 9 angelegten elektrischen Spannung ausrichten, wodurch die optischen Eigenschaften geregelt werden können. Die Trägerfolien 6, 7 bestehen aus PET und weisen eine Dicke von beispielsweise 0,125 mm auf. Die Trägerfolien 6, 7 sind mit einer zur aktiven Schicht 5 weisenden Beschichtung aus ITO mit einer Dicke von etwa 100 nm versehen, welche die Flächenelektroden 8, 9 ausbilden. Die Flächenelektroden 8, 9 sind über nicht dargestellte Sammelleiter (beispielweise ausgebildet aus Streifen einer Kupferfolie) mit elektrischen Kabeln 14 verbunden, welche die elektrische Verbindung zu der Steuereinheit 10 herstellen.

Diese Steuereinheit 10 ist beispielhaft an der innenraumseitigen, von der Zwischenschicht 3 abgewandten Oberfläche der Innenscheibe 2 angebracht. Dazu ist beispielsweise ein nicht dargestelltes Befestigungselement an die Innenscheibe 2 angeklebt, in welches die Steuereinheit 10 eingesetzt ist. Die Steuereinheit 10 muss aber nicht zwingend direkt an der Verbundscheibe angebracht sein. Sie kann alternativ beispielsweise am Armaturenbrett oder der Fahrzeugkarosserie angebracht sein oder in die Bordelektrik des Fahrzeugs integriert sein.

Die Verbundscheibe weist einen umlaufenden Randbereich auf, welche mit einem opaken Abdeckdruck 13 versehen ist. Diese Abdeckdruck 13 ist typischerweise aus einer schwarzen Emaille ausgebildet. Sie wird als Druckfarbe mit einem Schwarzpigment und Glasfritten im Siebdruckverfahren aufgedruckt und in die Scheibenoberfläche eingebrannt. Der Abdeckdruck 13 ist beispielhaft auf der innenraumseitigen Oberfläche der Außenscheibe 1 und auch auf der innenraumseitigen Oberfläche der Innenscheibe 2 aufgebracht. Die Seitenkanten des Funktionselements 4 sind durch diesen Abdeckdruck 13 verdeckt. Die Steuereinheit 10 ist in diesem opaken Randbereich angeordnet, also auf den Abdeckdruck 13 der Innenscheibe 2 aufgeklebt. Dort stört die Steuereinheit 10 die Durchsicht durch die Verbundscheibe nicht und ist optisch unauffällig. Zudem weist sie einen geringen Abstand zur Seitenkante der Verbundscheibe auf, so dass nur vorteilhaft kurze Kabel 14 zum elektrischen Anschluss des Funktionselements 14 nötig sind.

Die Steuereinheit 10 ist andererseits mit der Bordelektrik des Fahrzeugs verbunden, was in den Figuren 1 und 2 der Einfachheit halber nicht dargestellt ist. Die Steuereinheit 10 ist geeignet, in Abhängigkeit von einem Schaltsignal, welches der Fahrer beispielsweise mit einem Knopfdruck vorgibt, die Spannung an die Flächenelektroden 8, 9 des Funktionselements 4 anzulegen, welche für den gewünschten optischen Zustand des Funktionselements 4 (Schaltzustand) erforderlich ist.

Der Verbundscheibe weist beispielhaft vier unabhängige Schaltbereiche S1, S2, S3, S4 auf, in denen der Schaltzustand des Funktionselements 4 unabhängig voneinander durch die Steuereinheit 10 eingestellt werden kann. Die Schaltbereiche S1, S2, S3, S4 sind in der Richtung von der Vorderkante zur Hinterkante der Dachscheibe hintereinander angeordnet, wobei die Begriffe Vorderkante und Hinterkante auf die Fahrtrichtung des Fahrzeugs bezogen sind. Durch die Schaltbereiche S1, S2, S3, S4 kann der Fahrer des Fahrzeugs (beispielsweise in Abhängigkeit vom Sonnenstand) wählen, statt der gesamten Verbundscheibe nur einen Bereich derselben mit dem diffusen Zustand zu versehen, während die anderen Bereiche transparent bleiben.

Um die Schaltbereiche S1, S2, S3, S4 auszubilden, ist die erste Flächenelektrode 8 durch drei Isolierungslinien 8' unterbrochen, welche im Wesentlichen parallel zueinander angeordnet sind und sich von einer Seitenkante zur gegenüberliegenden Seitenkante des Funktionselements 4 erstrecken. Die Isolierungslinien 8' sind typischerweise durch Laserbearbeitung in die erste Flächenelektrode 8 eingebracht und teilt diese in vier stofflich voneinander getrennte Elektrodensegmente 8.1, 8.2, 8.3 und 8.4 auf. Jedes Elektrodensegment 8.1, 8.2, 8.3 und 8.4 ist unabhängig von den anderen mit der Steuereinheit 10 verbunden. Die Steuereinheit ist geeignet, unabhängig voneinander eine elektrische Spannung zwischen jedem Elektrodensegment 8.1, 8.2, 8.3 und 8.4 der ersten Flächenelektrode 8 einerseits und der zweiten Flächenelektrode 9 andererseits anzulegen, so dass der dazwischen befindliche Abschnitt der aktiven Schicht 5 mit der erforderlichen Spannung beaufschlagt wird, um einen gewünschten Schaltzustand zu erreichen.

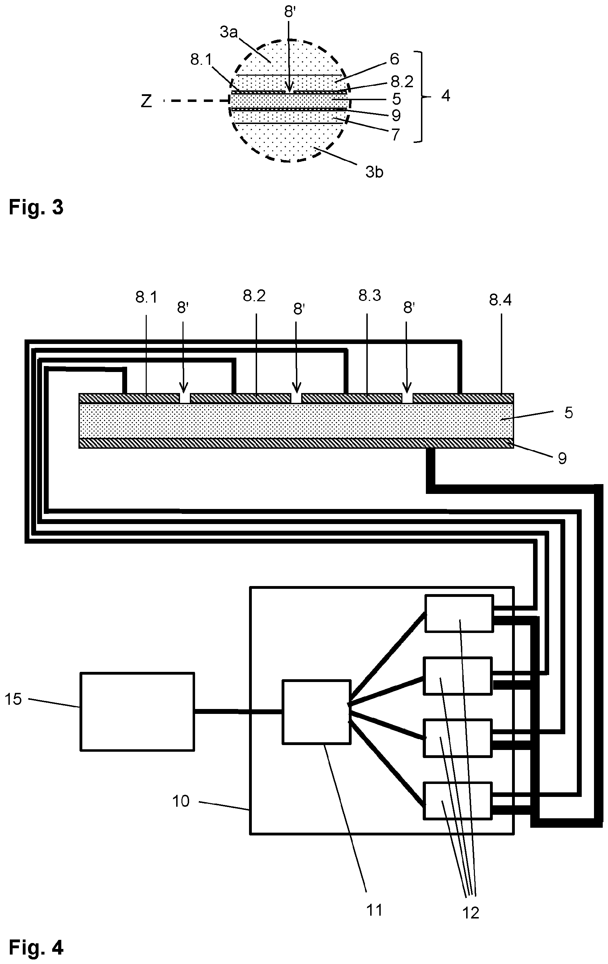

Wie im Ersatzschaltbild der Figur 4 veranschaulicht, ist die Steuereinheit 10 über die Bordelektrik des Fahrzeugs an eine Gleichspannungsquelle 15 angeschlossen. Die Gleichspannungsquelle 15 stellt im Fahrzeugbereich typischerweise eine Gleichspannung im Bereich von 12 V bis 14 V bereit (Bordspannung des Fahrzeugs). Die Steuereinheit 10 ist mit einem Gleichspannungswandler 11 ausgestattet, welcher die Bordspannung (Primärspannung) in eine Gleichspannung mit höherem Betrag wandelt, beispielsweise 65 V (Sekundärspannung). Die Sekundärspannung muss ausreichend hoch sein, um einen Schaltzustand des Funktionselements 4 von 100% zu realisieren. Die Steuereinheit 10 ist darüber hinaus mit vier Wechselrichtern 12 ausgestattet, die die Sekundärspannung in eine Wechselspannung wandeln. Dabei ist jeder Wechselrichter 12 genau einem Elektrodensegment 8.1, 8.2, 8.3, 8.4 der ersten Flächenelektrode 8 zugeordnet und mit diesem elektrisch verbunden. Die zweite Flächenelektrode 9 ist mit jedem Wechselrichter 12 verbunden.

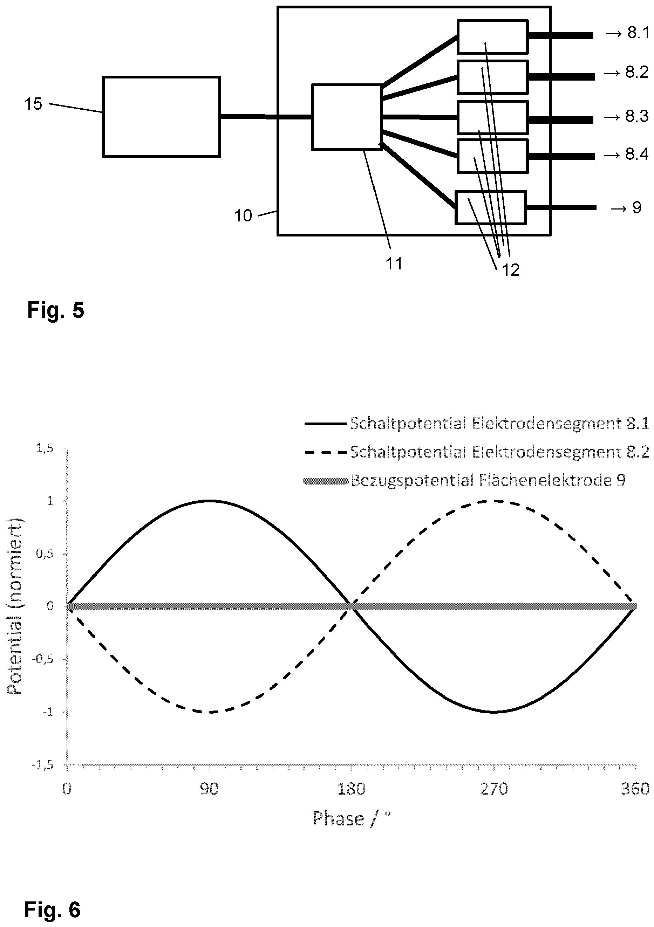

Figur 5 zeigt schematisch ein Ersatzschaltbild einer alternativen Ausgestaltung der Steuereinheit. Im Unterschied zu Figur 4 ist die Steuereinheit mit fünf Wechselrichtern 12 ausgestattet. Vier der Wechselrichter 12 sind jeweils genau einem Elektrodensegment 8.1, 8.2, 8.3, 8.4 der ersten Flächenelektrode 8 zugeordnet und mit diesem elektrisch verbunden. Die zweite Flächenelektrode 9 ist mit dem fünften Wechselrichter 12 verbunden. Die Anschlüsse an die Elektrodensegmente 8.1, 8.2, 8.3, 8.4 und an die zweite Flächenelektrode 9 sind der Einfachheit halber durch Pfeile symbolisiert, das Funktionselement 4 selbst nicht gezeigt.

Mit beiden Steuereinheiten 10 der Figuren 4 und 5 können die erfindungsgemäß erforderlichen voneinander unabhängigen Wechselspannungen für die verschiedenen Schaltbereiche S1, S2, S3, S4 bereitgestellt werden. Dabei wird insbesondere das Bezugspotential, welches an die zweite Flächenelektrode 9 angelegt wird, zeitlich konstant gehalten. Die Schaltpotentiale, welche unabhängig voneinander an die Elektrodensegmente 8.1, 8.2, 8.3, 8.4 der ersten Flächenelektrode 8 angelegt werden, sind zeitlich veränderlich. Betrag und Phase jedes Schaltpotentials kann unabhängig eingestellt werden, insbesondere rein softwaregesteuert, was einfach zu realisieren ist. Die Wechselspannung für jeden Schaltbereich S1, S2, S3, S4 ergibt sich als zeitlich veränderliche Differenz zwischen dem zeitlich veränderlichen Schaltpotential und dem konstanten Bezugspotential.

Figur 6 zeigt beispielhaft die elektrischen Potentiale für einen Fall, in dem zwei Schaltbereiche S1, S2 aktiviert werden sollen, also mit einer Wechselspannung beaufschlagt werden sollen, um einen Schaltzustand größer 0%, beispielsweise 100 %, zu erzeugen. Die zugeordneten Elektrodensegmente 8.1, 8.2 der ersten Flächenelektrode 8 werden dazu durch den an sie angeschlossenen Wechselrichter 12 mit einem Schaltpotential beaufschlagt, welches zeitlich mit einer Sinusfunktion moduliert wird. Der Betrag der Schaltpotentiale (Amplitude) ist für beide Elektrodensegmente 8.1, 8.2 gleich und ausreichend hoch gewählt, um die maximale Änderung der optischen Eigenschaften der aktiven Schicht 5 zwischen den Elektrodensegmenten 8.1, 8.2 und der zweiten Flächenelektrode 9 zu erzeugen (Schaltzustand von 100%). Sie weisen aber eine Phasenverschiebung von 180° zueinander auf. Das Bezugspotential, das an die nicht segmentierte zweite Flächenelektrode 9 angelegt wird, ist zeitlich konstant und beträgt 0V. Zwischen jedem der Elektrodensegmente 8.1, 8.2 einerseits und der zweiten Flächenelektrode 9 andererseits liegt dann eine sinusartige Wechselspannung an (Sinusspannung), die sich als zeitliche Veränderliche Differenz zwischen dem jeweiligen Schaltpotential und dem Bezugspotential ergibt. Die Wechselspannungen weisen die gleiche Amplitude auf, aber einer Phasenverschiebung von 180°.

Steht keine "echte" Wechselspannung mit negativen Anteilen zur Verfügung, so ist es auch möglich, für das Bezugspotential einen Wert größer 0V zu wählen, um den die Schaltpotentiale oszillieren, wodurch eine effektive Wechselspannung mit "relativen" positiven und negativen Beiträgen realisiert wird.

Die beiden übrigen Schaltbereiche S3, S4 sind nicht aktiviert, sie sollen also einen Schaltzustand von 0% aufweisen und daher spannungsfrei sein. Typischerweise wird die Schaltung derart vorgenommen, dass die beiden zugehörigen Elektrodensegmente 8.3, 8.4 mit einem Schaltpotential beaufschlagt werden, welches dem nominalen Bezugspotential entspricht - in diesem Fall ein zeitlich konstantes Potential von 0V. Dies ist vorteilhaft im Hinblick auf eine schnelle Entladung für den Fall, dass die Schaltbereiche S3, S4 vorher aktiviert waren. Außerdem macht es den Aufbau robuster gegenüber sogenannten "Schmutzwiderständen", insbesondere hervorgerufen durch Staub oder Feuchtigkeit. Alle Schaltbereiche S1, S2, S3, S4 bilden einen geschlossenen Stromkreis aus unter Beteiligung aller Elektrodensegmente 8.1, 8.2, 8.3, 8.4 der ersten Flächenelektrode 8 sowie der zweiten Flächenelektrode 9.

Werden die aktivierten Schaltbereiche S1, S2 auf herkömmliche Art mit einer Wechselspannung gleicher Phase betrieben, so würde sich jeweils ein gleichgerichteter elektrischer Stromfluss durch den zugehörigen Abschnitt der aktiven Schicht 5 zwischen den Elektrodensegmenten 8.1, 8.2 und der zweiten Flächenelektrode 9 ausbilden. Da die als Flächenelektroden 8, 9 fungierenden ITO-Schichten einen vergleichsweise hohen elektrischen Widerstand aufweisen, würde dieser Stromfluss zu einer Potentialverschiebung der zweiten Flächenelektrode 9 führen. Dies hätte nun zur Folge, dass in den Schaltbereichen S3, S4, die eigentlich einen spannungsfreien Schaltzustand von 0% aufweisen sollen, eine gewisse Spannung erzeugt würde, so dass in dem betreffenden Schaltbereich S3, S4 ein endlicher Schaltzustand größer 0% erzeugt würde, der eigentlich nicht erwünscht ist. Man spricht in diesem Fall von einer Kommunikation (Übersprechen, "Cross Talk") zwischen den Schaltbereichen S1, S2, S3, S4.

Durch die Phasenverschiebung der Wechselspannung der aktivierten Schaltbereichen S1, S2 kann dieser Effekt vermieden werden. Infolge der Phasenverschiebung von 180° sind die Ströme in den Schaltbereichen S1, S2 einander stets entgegengerichtet, also gegenläufig. Die Beiträge zur Potentialverschiebung der zweiten Flächenelektrode 9 kompensieren sich daher zu jedem Zeitpunkt. Insgesamt wird eine Potentialverschiebung verhindert und die nicht aktivierten Schaltbereiche S3, S4 bleiben stets spannungsfrei.

Auch bei einer höheren geraden Anzahl an aktivierten Schaltbereichen kann der "Cross Talk" auf diese Weise ideal vermieden werden, wenn die Schaltbereiche in zwei Gruppen aufteilt werden, wobei die Schaltbereiche derselben Gruppe mit einer Wechselspannung dergleichen Phase betrieben wird und die Wechselspannungen der beiden Gruppen eine Phasenverschiebung von 180° aufweisen.

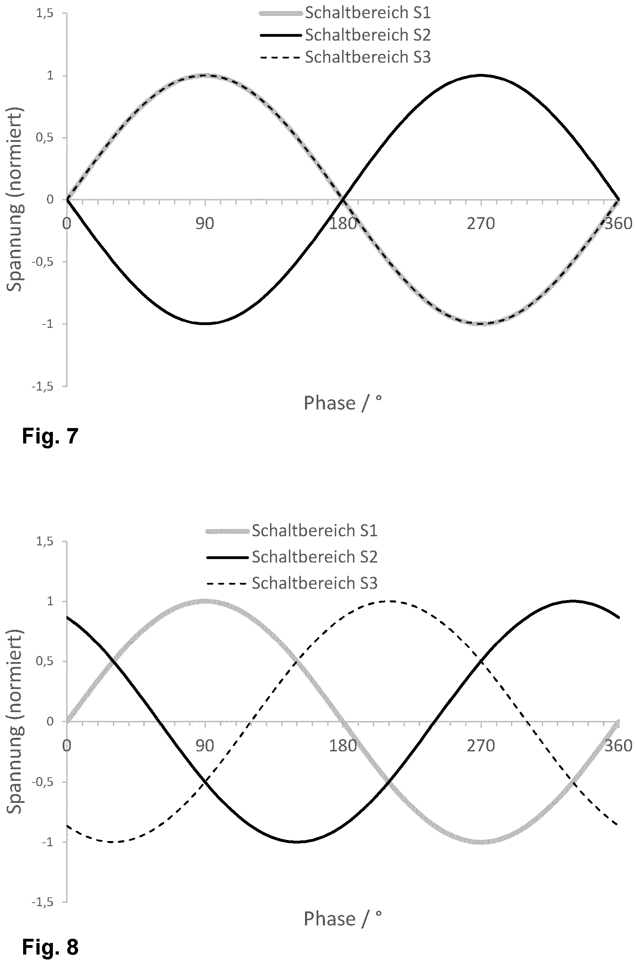

Figur 7 zeigt beispielhaft Sinusspannungen für einen Fall, in dem eine ungerade Anzahl von Schaltbereichen, nämlich drei Schaltbereiche S1, S2, S3 aktiviert werden sollen, also mit einer Wechselspannung beaufschlagt werden sollen, um einen Schaltzustand größer 0%, beispielsweise 100 %, zu erzeugen. Die beiden Schaltbereiche S1, S3 werden mit einer Wechselspannung der gleichen Phase betrieben. Der Schaltbereich S2 wird mit einer Wechselspannung betrieben, welche dazu um 180° phasenverschoben ist.

Die resultierenden gegenläufigen Ströme des Schaltbereiche S1, S3 kompensieren einander und tragen daher nicht zur Potentialverschiebung der zweiten Flächenelektrode 9 bei. Der Stromfluss im Schaltbereich S2 wird nicht kompensiert und führt zu einer Potentialverschiebung. Die Potentialverschiebung ist allerdings deutlich geringer ausgeprägt, als wenn alle Schaltbereiche S1, S2, S3 mit derselben Phase betrieben und sich die gleichgerichteten Stromflüsse addieren würden. Die Potentialverschiebung und der damit verbundene "Cross Talk" wird in diesem Fall nicht völlig vermieden, aber doch zumindest signifikant reduziert.

Figur 8 zeigt beispielhaft Sinusspannungen für den Fall, in dem eine ungerade Anzahl von Schaltbereichen, nämlich drei Schaltbereiche S1, S2, S3 aktiviert werden sollen, in einer weiteren Ausführungsform. Jeder Schaltbereiche S1, S2, S3 wird mit Wechselspannung einer eigenen, von den anderen Schaltbereichen verschiedenen Phase betrieben. Die Phasenverschiebungen der Schaltbereiche S1, S2, S3 ist hier nicht stets konstant, sondern wird jeweils in Abhängigkeit von der Anzahl der aktivierten Schaltbereiche bestimmt. Die benötigte Phasenverschiebung beträgt 360° geteilt durch die Anzahl aktivierter Schaltbereiche, in diesem Fall also 120°.

Alle Schaltbereiche weisen eine Phasenverschiebung von 120° oder einem ganzzahligen Vielfachen davon auf:

- Die Phasenverschiebung zwischen den Schaltbereichen S1, S2 beträgt 120°.
- Die Phasenverschiebung zwischen den Schaltbereichen S2, S3 beträgt 120°.
- Die Phasenverschiebung zwischen den Schaltbereichen S1, S3 beträgt 240°, was in diesem Fall einer Phasenverschiebung von -120° entspricht (also einer mit Betrag 120° in die Gegenrichtung).

Durch diese Ausführungsform, bei der die Phasenverschiebung jeweils in Abhängigkeit von der Anzahl aktivierter Schaltbereiche gewählt wird und alle Schaltbereiche zueinander phasenverschoben betrieben werden, kann stets eine ideale Kompensation der Potentialverschiebung der zweiten Flächenelektrode 9 erreicht werden, auch bei einer ungeraden Anzahl aktivierter Schaltbereiche. Der "Cross Talk" wird in jedem Fall verhindert.

Bezugszeichenliste:

| (S1, S2, S3, S4) | unabhängige Schaltbereiche der Verglasungseinheit |
|---|---|
| (1) | Außenscheibe |
| (2) | Innenscheibe |
| (3) | thermoplastische Zwischenschicht |
| (3a) | erste Schicht der Zwischenschicht 3 |
| (3b) | zweite Schicht der Zwischenschicht 3 |
| (3c) | dritte Schicht der Zwischenschicht 3 |
| (4) | Funktionselement mit elektrisch steuerbaren optischen Eigenschaften |
| (5) | aktive Schicht des Funktionselements 4 |
| (6) | erste Trägerfolie des Funktionselements 4 |
| (7) | zweite Trägerfolie des Funktionselements 4 |
| (8) | erste Flächenelektrode des Funktionselements 4 |
| (8.1, 8.2, 8.3, 8.4) | Elektrodensegmente der ersten Flächenelektrode 8 |
| (8') | Isolierungslinie zwischen zwei Elektrodensegmenten 8.1, 8.2, 8.3, 8.4 |
| (9) | zweite Flächenelektrode des Funktionselements 4 |
| (10) | Steuereinheit |
| (11) | Gleichspannungswandler |
| (12) | Wechselrichter |
| (13) | Abdeckdruck |

(14)  elektrische Kabel
(15)  Gleichspannungsquelle

X-X'  Schnittlinie
Y  vergrößerter Bereich

## Patentansprüche

1. Verglasungseinheit mit elektrisch steuerbaren optischen Eigenschaften mit mehreren unabhängigen Schaltbereichen (S1, S2, S3, S4), umfassend

    - eine Verbundscheibe, umfassend

        - eine Außenscheibe (1) und eine Innenscheibe (2), die über eine thermoplastische Zwischenschicht (3) miteinander verbunden sind,
        - ein elektrisch steuerbares Funktionselement (4), welches zwischen der Außenscheibe (1) und der Innenscheibe (2) angeordnet ist und eine aktive Schicht (5) mit elektrisch steuerbaren optischen Eigenschaften zwischen einer ersten Flächenelektrode (8) und einer zweiten Flächenelektrode (9) aufweist,

    - eine Steuereinheit (10), welche geeignet ist, die optischen Eigenschaften des Funktionselements (4) zu steuern, wobei die erste Flächenelektrode (8) durch mindestens eine Isolierungslinie (8') in mindestens zwei getrennte Elektrodensegmente (8.1, 8.2, 8.3, 8.4) aufgeteilt ist, wobei jedes Elektrodensegment (8.1, 8.2, 8.3, 8.4) der ersten Flächenelektrode (8) und die zweite Flächenelektrode (9) elektrisch mit der Steuereinheit (10) verbunden sind, so dass zwischen jedem Elektrodensegment (8.1, 8.2, 8.3, 8.4) der ersten Flächenelektrode (8) und der zweiten Flächenelektrode (9) unabhängig voneinander eine elektrische Wechselspannung angelegt werden kann, um die optischen Eigenschaften des dazwischen befindlichen Abschnitts der aktiven Schicht (5) zu steuern, **dadurch gekennzeichnet, dass** die Steuereinheit (10) geeignet ist, zwischen mindestens zwei Elektrodensegmenten (8.1, 8.2, 8.3, 8.4) der ersten Flächenelektrode (8) einerseits und der zweiten Flächenelektrode (9) andererseits jeweils eine Wechselspannung anzulegen, wobei die Wechselspannungen phasenverschoben sind.

2. Verglasungseinheit nach Anspruch 1, wobei das Funktionselement (4) ein PDLC-Funktionselement oder ein SPD-Funktionselement ist.

3. Verglasungseinheit nach Anspruch 1 oder 2, wobei die Steuereinheit (10)

    - an eine Gleichspannungsquelle (15) mit einer Primärspannung angeschlossen ist,
    - optional mit einem Gleichspannungswandler (11) ausgestattet ist, der geeignet ist, die Primärspannung in eine höhere Sekundärspannung zu wandeln, und
    - mit einer Mehrzahl von Wechselrichtern (12) ausgestattet ist, die geeignet sind, die Primärspannung beziehungsweise die Sekundärspannung in eine Wechselspannung zu wandeln.

4. Verglasungseinheit nach Anspruch 3, wobei die Anzahl der Wechselrichter (12) der Anzahl an Elektrodensegmenten (8.1, 8.2, 8.3, 8.4) der ersten Flächenelektrode (8) entspricht und wobei jeder Wechselrichter (12) an genau ein Elektrodensegment (8.1, 8.2, 8.3, 8.4) der ersten Flächenelektrode (8) einerseits und an die zweite Flächenelektrode (9) andererseits angeschlossen ist.

5. Verglasungseinheit nach Anspruch 3, wobei die Anzahl der Wechselrichter (12) die Anzahl an Elektrodensegmenten (8.1, 8.2, 8.3, 8.4) der ersten Flächenelektrode (8) um 1 übersteigt und wobei jedes Elektrodensegment (8.1, 8.2, 8.3, 8.4) der ersten Flächenelektrode (8) und die zweite Flächenelektrode (9) an jeweils einen eigenen Wechselrichter (12) angeschlossen ist.

6. Verglasungseinheit nach einem der Ansprüche 1 bis 5, wobei die Wechselspannung eine Sinusspannung ist.

7. Verglasungseinheit nach einem der Ansprüche 1 bis 6, wobei die erste Flächenelektrode (8) durch mindestens zwei Isolierungslinien (8') in mindestens drei getrennte Elektrodensegmente (8.1, 8.2, 8.3, 8.4) aufgeteilt ist.

8. Verglasungseinheit nach einem der Ansprüche 1 bis 7, wobei die Flächenelektroden (8, 9) auf Basis von Indium-Zinn-Oxid (ITO) oder Silber ausgebildet sind.

9. Verglasungseinheit nach einem der Ansprüche 1 bis 8, wobei die mindestens eine Isolierungslinie (8') eine Breite von 5 µm bis 500 µm aufweist.

10. Verfahren zum Steuern einer Verglasungseinheit mit elektrisch steuerbaren optischen Eigenschaften mit mehreren unabhängigen Schaltbereichen (S1, S2, S3, S4),
wobei die Verglasungseinheit

   - eine Verbundscheibe, umfassend

      - eine Außenscheibe (1) und eine Innenscheibe (2), die über eine thermoplastische Zwischenschicht (3) miteinander verbunden sind,
      - ein elektrisch steuerbares Funktionselement (4), welches zwischen der Außenscheibe (1) und der Innenscheibe (2) angeordnet ist und eine aktive Schicht (5) mit elektrisch steuerbaren optischen Eigenschaften zwischen einer ersten Flächenelektrode (8) und einer zweiten Flächenelektrode (9) aufweist,
      - eine Steuereinheit (10), welche geeignet ist, die optischen Eigenschaften des Funktionselements (4) zu steuern, umfasst

   wobei die erste Flächenelektrode (8) durch mindestens eine Isolierungslinie (8') in mindestens zwei getrennte Elektrodensegmente (8.1, 8.2, 8.3, 8.4) aufgeteilt ist,
   wobei jedes Elektrodensegment (8.1, 8.2, 8.3, 8.4) der ersten Flächenelektrode (8) und die zweite Flächenelektrode (9) elektrisch mit der Steuereinheit (10) verbunden sind, so dass zwischen jedem Elektrodensegment (8.1, 8.2, 8.3, 8.4) der ersten Flächenelektrode (8) und der zweiten Flächenelektrode (9) unabhängig voneinander eine elektrische Wechselspannung angelegt werden kann, um die optischen Eigenschaften des dazwischen befindlichen Abschnitts der aktiven Schicht (5) zu steuern, **dadurch gekennzeichnet, dass** zwischen mindestens zwei Elektrodensegmenten (8.1, 8.2, 8.3, 8.4) der ersten Flächenelektrode (8) einerseits und der zweiten Flächenelektrode (9) andererseits jeweils eine Wechselspannung angelegt wird, wobei die Wechselspannungen phasenverschoben sind.

11. Verfahren nach Anspruch 10, wobei zwischen n Elektrodensegmenten (8.1, 8.2, 8.3, 8.4) der ersten Flächenelektrode (8) einerseits und der zweiten Flächenelektrode (9) andererseits jeweils eine Wechselspannung angelegt wird, wobei $n$ eine ganze Zahl ist, und wobei

   - falls $n$ eine gerade Zahl ist, zwischen $n/2$ Elektrodensegmenten (8.1, 8.2, 8.3, 8.4) der ersten Flächenelektrode (8) einerseits und der zweiten Flächenelektrode (9) andererseits eine Wechselspannung mit einer ersten Phase angelegt wird und zwischen $n/2$ Elektrodensegmenten (8.1, 8.2, 8.3, 8.4) der ersten Flächenelektrode (8) einerseits und der zweiten Flächenelektrode (9) andererseits eine Wechselspannung mit einer zweiten Phase angelegt wird, und

   - falls $n$ eine ungerade Zahl ist, zwischen $(n+1)/2$ Elektrodensegmenten (8.1, 8.2, 8.3, 8.4) der ersten Flächenelektrode (8) einerseits und der zweiten Flächenelektrode (9) andererseits eine Wechselspannung mit einer ersten Phase angelegt wird und zwischen $(n-1)/2$ Elektrodensegmenten (8.1, 8.2, 8.3, 8.4) der ersten Flächenelektrode (8) einerseits und der zweiten Flächenelektrode (9) andererseits eine Wechselspannung mit einer zweiten Phase angelegt wird,

   und wobei die erste Phase und die zweite Phase eine Phasenverschiebung von 180° aufweisen.

12. Verfahren nach Anspruch 11, wobei die Wechselspannungen zwischen direkt benachbarten Elektrodensegmenten (8.1, 8.2, 8.3, 8.4) der ersten Flächenelektrode (8) einerseits und der zweiten Flächenelektrode (9) andererseits jeweils eine Phasenverschiebung von 180° aufweisen.

13. Verfahren nach Anspruch 10, wobei zwischen n Elektrodensegmenten (8.1, 8.2, 8.3, 8.4) der ersten Flächenelektrode (8) einerseits und der zweiten Flächenelektrode (9) andererseits jeweils eine Wechselspannung mit einer eigenen Phase angelegt wird, wobei *n* eine ganze Zahl ist, und wobei die Wechselspannungen untereinander eine Phasenverschiebung von $360°/n$ oder einem ganzzahligen Vielfachen davon aufweisen.

14. Verfahren nach einem der Ansprüche 10 bis 13, wobei an jedes Elektrodensegment (8.1, 8.2, 8.3, 8.4) der ersten Flächenelektrode (8) ein zeitlich veränderliches elektrisches Schaltpotential angelegt wird und an die zweite Flächenelektrode (9) ein zeitlich konstantes Bezugspotential angelegt wird, um die Wechselspannung zu erzeugen.

15. Verwendung einer Verglasungseinheit nach einem der Ansprüche 1 bis 9 als Fensterscheibe eines Fahrzeugs, insbesondere als Windschutzscheibe oder Dachscheibe.

**Claims**

1. Glazing unit with electrically controllable optical properties having a plurality of independent switching regions (S1, S2, S3, S4), comprising

   - a laminated glass pane, comprising
   - an outer pane (1) and an inner pane (2), which are connected to one another via a thermoplastic intermediate layer (3),
   - an electrically controllable functional element (4) which is arranged between the outer pane (1) and the inner pane (2) and has an active layer (5) having electrically controllable optical properties between a first planar electrode (8) and a second planar electrode (9),
   - a control unit (10) which is suitable for controlling the optical properties of the functional element (4),

   wherein the first planar electrode (8) is subdivided by at least one insulation line (8') into at least two separate electrode segments (8.1, 8.2, 8.3, 8.4),
   wherein each electrode segment (8.1, 8.2, 8.3, 8.4) of the first planar electrode (8) and the second planar electrode (9) are electrically connected to the control unit (10), so that an AC voltage can be applied independently between each electrode segment (8.1, 8.2, 8.3, 8.4) of the first planar electrode (8) and the second planar electrode (9) in order to control the optical properties of the section of the active layer (5) located between them,
   **characterized in that** the control unit (10) is suitable for applying an AC voltage between at least two electrode segments (8.1, 8.2, 8.3, 8.4) of the first planar electrode (8), on the one hand, and the second planar electrode (9), on the other hand, wherein the AC voltages are phase-shifted.

2. Glazing unit according to Claim 1, wherein the functional element (4) is a PDLC functional element or an SPD functional element.

3. Glazing unit according to either Claim 1 or 2, wherein the control unit (10)

   - is connected to a DC voltage source (15) with a primary voltage,
   - is optionally equipped with a DC-DC converter (11) which is suitable for converting the primary voltage into a higher secondary voltage, and
   - is equipped with a plurality of inverters (12) which are suitable for converting the primary voltage or the secondary voltage into an AC voltage.

4. Glazing unit according to Claim 3, wherein the number of inverters (12) corresponds to the number of electrode segments (8.1, 8.2, 8.3, 8.4) of the first planar electrode (8), and wherein each inverter (12) is connected to exactly one electrode segment (8.1, 8.2, 8.3, 8.4) of the first planar electrode (8), on the one hand, and to the second planar electrode (9), on the other hand.

5. Glazing unit according to Claim 3, wherein the number of inverters (12) exceeds the number of electrode segments (8.1, 8.2, 8.3, 8.4) of the first planar electrode (8) by 1, and wherein each electrode segment (8.1, 8.2, 8.3, 8.4) of the first planar electrode (8) and the second planar electrode (9) are connected in each case to a separate inverter (12).

6. Glazing unit according to any one of Claims 1 to 5, wherein the AC voltage is a sinusoidal voltage.

7. Glazing unit according to any one of Claims 1 to 6, wherein the first planar electrode (8) is subdivided by at least two insulation lines (8') into at least three separate electrode segments (8.1, 8.2, 8.3, 8.4).

8. Glazing unit according to any one of Claims 1 to 7, wherein the planar electrodes (8, 9) are formed on the basis of indium tin oxide (ITO) or silver.

9. Glazing unit according to any one of Claims 1 to 8, wherein the at least one insulation line (8') has a width of 5 $\mu$m to 500 $\mu$m.

10. Method for controlling a glazing unit with electrically controllable optical properties having a plurality of independent switching regions (S1, S2, S3, S4),

   wherein the glazing unit comprises

   - a laminated glass pane, comprising
   - an outer pane (1) and an inner pane (2), which are connected to one another via a thermoplastic intermediate layer (3),
   - an electrically controllable functional element (4) which is arranged between the outer pane (1) and the inner pane (2) and has an active layer (5) having electrically controllable optical properties between a first planar electrode (8) and a second planar electrode (9),
   - a control unit (10) which is suitable for controlling the optical properties of the functional element (4),

   wherein the first planar electrode (8) is subdivided by at least one insulation line (8') into at least two separate electrode segments (8.1, 8.2, 8.3, 8.4),
   wherein each electrode segment (8.1, 8.2, 8.3, 8.4) of the first planar electrode (8) and the second planar electrode (9) are electrically connected to the control unit (10), so that an AC voltage can be applied independently between each electrode segment (8.1, 8.2, 8.3, 8.4) of the first planar electrode (8) and the second planar electrode (9) in order to control the optical properties of the section of the active layer (5) located between them, **characterized in that** an AC voltage is applied between at least two electrode segments (8.1, 8.2, 8.3, 8.4) of the first planar electrode (8), on the one hand, and the second planar electrode (9), on the other hand, wherein the AC voltages are phase-shifted.

11. Method according to Claim 10, wherein an AC voltage is applied in each case between $n$ electrode segments (8.1, 8.2, 8.3, 8.4) of the first planar electrode (8), on the one hand, and the second planar electrode (9), on the other hand, wherein $n$ is an integer, and wherein

   - if $n$ is an even number, an AC voltage with a first phase is applied between $n/2$ electrode segments (8.1, 8.2, 8.3, 8.4) of the first planar electrode (8), on the one hand, and the second planar electrode (9), on the other hand, and an AC voltage with a second phase is applied between $n/2$ electrode segments (8.1, 8.2, 8.3, 8.4) of the first planar electrode (8), on the one hand, and the second planar electrode (9), on the other hand, and

   - if $n$ is an odd number, an AC voltage with a first phase is applied between $(n+1)/2$ electrode segments (8.1, 8.2, 8.3, 8.4) of the first planar electrode (8), on the one hand, and the second planar electrode (9), on the other hand, and an AC voltage with a second phase is applied between $(n-1)/2$ electrode segments (8.1, 8.2, 8.3, 8.4) of the first planar electrode (8), on the one hand, and the second planar electrode (9), on the other hand, and wherein the first phase and the second phase have a 180° phase shift.

12. Method according to Claim 11, wherein the AC voltages between directly adjacent electrode segments (8.1, 8.2, 8.3, 8.4) of the first planar electrode (8), on the one hand, and the second planar electrode (9), on the other hand, each have a 180° phase shift.

13. Method according to Claim 10, wherein an AC voltage with a separate phase is applied in each case between $n$ electrode segments (8.1, 8.2, 8.3, 8.4) of the first planar electrode (8), on the one hand, and the second planar electrode (9), on the other hand, wherein *n* is an integer, and wherein the AC voltages have a phase shift of $360°/n$ amongst each other or an integer multiple thereof.

14. Method according to any one of Claims 10 to 13, wherein an electrical switching potential which is variable over time is applied to each electrode segment (8.1, 8.2, 8.3, 8.4) of the first planar electrode (8) and a reference potential which is constant over time is applied to the second planar electrode (9) in order to produce the AC voltage.

15. Use of a glazing unit according to any one of Claims 1 to 9 as a window pane of a vehicle, in particular as a windshield or roof panel.

## Revendications

1. Unité de vitrage comportant des propriétés optiques pouvant être commandées électriquement et comportant plusieurs zones de commutation (S1, S2, S3, S4) indépendantes, comprenant

   - un vitrage feuilleté, comprenant
   - une vitre externe (1) et une vitre interne (2), lesquelles sont reliées entre elles par l'intermédiaire d'une couche intermédiaire (3) thermoplastique,
   - un élément fonctionnel (4) pouvant être commandé électriquement, lequel est disposé entre la vitre externe (1) et la vitre interne (2) et présente une couche active (5) comportant des propriétés optiques pouvant être commandées électriquement entre une première électrode plane (8) et une seconde électrode plane (9),
   - une unité de commande (10) qui est adaptée pour commander les propriétés optiques de l'élément fonctionnel (4),

   dans laquelle la première électrode plane (8) est divisée par au moins une ligne d'isolation (8') en au moins deux segments d'électrode (8.1, 8.2, 8.3, 8.4) séparés,
   dans laquelle chaque segment d'électrode (8.1, 8.2, 8.3, 8.4) de la première électrode plane (8) et la seconde électrode plane (9) sont connectés électriquement à l'unité de commande (10), de sorte qu'une tension alternative électrique peut être appliquée entre chaque segment d'électrode (8.1, 8.2, 8.3, 8.4) de la première électrode plane (8) et la seconde électrode plane (9) indépendamment les uns des autres pour commander les propriétés optiques de la section de la couche active (5) située entre elles,
   **caractérisée en ce que** l'unité de commande (10) est adaptée pour appliquer respectivement une tension alternative entre au moins deux segments d'électrode (8.1, 8.2, 8.3, 8.4) de la première électrode plane (8) d'une part et la seconde électrode plane (9) d'autre part, dans laquelle les tensions alternatives sont déphasées.

2. Unité de vitrage selon la revendication 1, dans laquelle l'élément fonctionnel (4) est un élément fonctionnel PDLC ou un élément fonctionnel SPD.

3. Unité de vitrage selon la revendication 1 ou 2, dans laquelle l'unité de commande (10)

   - est raccordée à une source de tension continue (15) avec une tension primaire,
   - est éventuellement équipée d'un convertisseur continu-continu (11) qui est adapté pour convertir la tension primaire en une tension secondaire plus élevée, et
   - est équipée d'une pluralité d'onduleurs (12) qui sont adaptés pour convertir la tension primaire ou la tension secondaire en une tension alternative.

4. Unité de vitrage selon la revendication 3, dans laquelle le nombre d'onduleurs (12) correspond au nombre de segments d'électrode (8.1, 8.2, 8.3, 8.4) de la première électrode plane (8) et dans laquelle chaque onduleur (12) est raccordé à exactement un segment d'électrode (8.1, 8.2, 8.3, 8.4) de la première électrode plane (8) d'une part et à la seconde électrode plane (9) d'autre part.

5. Unité de vitrage selon la revendication 3, dans laquelle le nombre d'onduleurs (12) dépasse de 1 le nombre de segments d'électrode (8.1, 8.2, 8.3, 8.4) de la première électrode plane (8) et dans laquelle chaque segment d'électrode (8.1, 8.2, 8.3, 8.4) de la première électrode plane (8) et la seconde électrode plane (9) sont raccordés à respectivement un onduleur (12) propre.

**6.** Unité de vitrage selon l'une des revendications 1 à 5, dans laquelle la tension alternative est une tension sinusoïdale.

**7.** Unité de vitrage selon l'une des revendications 1 à 6, dans laquelle la première électrode plane (8) est divisée par au moins deux lignes d'isolation (8') en au moins trois segments d'électrode (8.1, 8.2, 8.3, 8.4) séparés.

**8.** Unité de vitrage selon l'une des revendications 1 à 7, dans laquelle les électrodes planes (8, 9) sont réalisées à base d'oxyde d'indium-étain (ITO) ou d'argent.

**9.** Unité de vitrage selon l'une des revendications 1 à 8, dans laquelle l'au moins une ligne d'isolation (8') présente une épaisseur allant de 5 μm à 500 μm.

**10.** Procédé pour la commande d'une unité de vitrage comportant des propriétés optiques pouvant être commandées électriquement et comportant plusieurs zones de commutation (S1, S2, S3, S4) indépendantes, dans lequel l'unité de vitrage comprend

- un vitrage feuilleté, comprenant
- une vitre externe (1) et une vitre interne (2), lesquelles sont reliées entre elles par l'intermédiaire d'une couche intermédiaire (3) thermoplastique,
- un élément fonctionnel (4) pouvant être commandé électriquement, lequel est disposé entre la vitre externe (1) et la vitre interne (2) et présente une couche active (5) comportant des propriétés optiques pouvant être commandées électriquement entre une première électrode plane (8) et une seconde électrode plane (9),
- une unité de commande (10) qui est adaptée pour commander les propriétés optiques de l'élément fonctionnel (4),
dans lequel la première électrode plane (8) est divisée par au moins une ligne d'isolation (8') en au moins deux segments d'électrode (8.1, 8.2, 8.3, 8.4) séparés,
dans lequel chaque segment d'électrode (8.1, 8.2, 8.3, 8.4) de la première électrode plane (8) et la seconde électrode plane (9) sont connectés électriquement à l'unité de commande (10), de sorte qu'une tension alternative électrique peut être appliquée entre chaque segment d'électrode (8.1, 8.2, 8.3, 8.4) de la première électrode plane (8) et la seconde électrode plane (9) indépendamment les uns des autres pour commander les propriétés optiques de la section de la couche active (5) située entre elles,
**caractérisé en ce que** respectivement une tension alternative est appliquée entre au moins deux segments d'électrode (8.1, 8.2, 8.3, 8.4) de la première électrode plane (8) d'une part et la seconde électrode plane (9) d'autre part, dans lequel les tensions alternatives sont déphasées.

**11.** Procédé selon la revendication 10, dans lequel respectivement une tension alternative est appliquée entre *n* segments d'électrode (8.1, 8.2, 8.3, 8.4) de la première électrode plane (8) d'une part et la seconde électrode plane (9) d'autre part, dans lequel *n* est un nombre entier, et dans lequel

- si *n* est un nombre pair, une tension alternative comportant une première phase est appliquée entre *n*/2 segments d'électrode (8.1, 8.2, 8.3, 8.4) de la première électrode plane (8) d'une part et la seconde électrode plane (9) d'autre part et une tension alternative comportant une seconde phase est appliquée entre *n*/2 segments d'électrode (8.1, 8.2, 8.3, 8.4) de la première électrode plane (8) d'une part et la seconde électrode plane (9) d'autre part, et
- si *n* est un nombre impair, une tension alternative comportant une première phase est appliquée entre (*n*+1)/2 segments d'électrode (8.1, 8.2, 8.3, 8.4) de la première électrode plane (8) d'une part et la seconde électrode plane (9) d'autre part, et une tension alternative comportant une seconde phase est appliquée entre (*n*-1)/2 segments d'électrode (8.1, 8.2, 8.3, 8.4) de la première électrode plane (8) d'une part et la seconde électrode plane (9) d'autre part,

et dans lequel la première phase et la seconde phase présentent un déphasage de 180°.

**12.** Procédé selon la revendication 11, dans lequel les tensions alternatives entre des segments d'électrode (8.1, 8.2, 8.3, 8.4) directement voisins de la première électrode plane (8) d'une part et la seconde électrode plane (9) d'autre part présentent respectivement un déphasage de 180°.

**13.** Procédé selon la revendication 10, dans lequel respectivement une tension alternative comportant une phase propre est appliquée entre n segments d'électrode (8.1, 8.2, 8.3, 8.4) de la première électrode plane (8) d'une part et la seconde électrode plane (9) d'autre part, dans lequel *n* est un nombre entier, et dans lequel les tensions alternatives présentent entre elles un déphasage de *360°/n* ou d'un multiple entier de celui-ci.

14. Procédé selon l'une des revendications 10 à 13, dans lequel un potentiel électrique de commutation variable dans le temps est appliqué à chaque segment d'électrode (8.1, 8.2, 8.3, 8.4) de la première électrode plane (8) et un potentiel de référence constant dans le temps est appliqué à la seconde électrode plane (9) afin de générer la tension alternative.

15. Utilisation d'une unité de vitrage selon l'une des revendications 1 à 9 comme vitre d'un véhicule, en particulier comme pare-brise ou vitre de toit.

S1   S2   S3   S4

13

X — · — · — · — · — · — · — · — · — X'

10

**Fig. 1**

**X-X'**

1

3a

3
3c
3b

13   2   Z

13

4

14

10

**Fig. 2**

**Fig. 3**

**Fig. 4**

**Fig. 5**

Schaltpotential Elektrodensegment 8.1
Schaltpotential Elektrodensegment 8.2
Bezugspotential Flächenelektrode 9

**Fig. 6**

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0876608 B1
- WO 2011033313 A1
- DE 102008026339 A1
- US 20120026573 A1
- WO 2010147494 A1
- EP 1862849 A1
- WO 2012007334 A1
- DE 10043141 A1
- EP 3456913 A1
- DE 102013001334 A1

- DE 102005049081 B3
- DE 102005007427 A1
- DE 102007027296 A1
- WO 2014072137 A1
- WO 2017157626 A1
- WO 2020083562 A1
- DE 102017213291 B3
- DE 102010056203 A1
- WO 2020152075 A1